# EUROPEAN PATENT SPECIFICATION

(11) **EP 3 752 426 B1**
(45) Date of publication and mention of the grant of the patent: **05.01.2022**
(21) Application number: 19709221.6
(22) Date of filing: 19.02.2019
(51) Int. Cl.: B65B 23/00, B65B 23/10, B65G 27/10, B65G 27/12, B65G 47/16, B65G 49/05, B65B 5/06, B65G 1/02

(54) **SYSTEM AND METHOD FOR LOADING, TRANSPORTING AND UNLOADING FRANGIBLE PRODUCTS**
SYSTEM UND VERFAHREN ZUM LADEN, TRANSPORTIEREN UND ENTLADEN VON ZERBRECHLICHEN PRODUKTEN
SYSTÈME ET MÉTHODE DE CHARGEMENT, TRANSPORT ET DÉCHARGEMENT DE PRODUITS CASSABLES

(30) Priority: 17.02.2018 US 201862631705 P
(43) Date of publication of application: 23.12.2020
(73) Proprietor: Svejkovsky, Paul, Blake, Dallas TX 75219 (US)
(72) Inventor: Svejkovsky, Paul, Blake, Dallas TX 75219 (US)
(74) Representative: HGF
(86) International application number: PCT/US2019/018485
(87) International publication number: WO 2019/161358

(56) References cited:
- US-A1- 2001 007 300
- US-A1- 2002 130 015
- US-A1- 2002 170 850
- US-A1- 2015 239 677
- US-B1- 6 378 688

## Description

### BACKGROUND

### Statement of Related Applications

This application depends from and claims priority to U.S. Provisional Patent Application Serial no. 62/631,705 filed in the U.S. Patent and Trademark Office on 17 February 2018.

### Field of the Invention

The present invention relates to a system for loading, transporting and/or unloading a product that is easily breakable. More specifically, the present invention relates to a system for loading, transporting and unloading a large plurality of fragile food portions such as potato chips in a manner and with apparatuses that prevent unwanted breakage of the food portions, that prevent unwanted bridging and clumping of food portions, and that promote product freshness.

### Background of the Related Art

Many products are frangible, meaning that the products are easily broken or damaged as a result of being processed, bagged, packaged and/or transported to a location at which the products are to be processed, bagged or packaged. The problem is exacerbated when the products are produced in large pluralities and moved in a manner in which the products contact one another during loading, transport and unloading, in addition to when the frangible products contact each other during processing, bagging or packaging.

Transporting products for processing, bagging or packaging is especially necessary where, for example, a central processing, bagging or packaging facility can be used for processing, bagging or packaging a variety of products. Advantageously, this enables a single facility and the equipment at the single facility to be economically used to process, bag or package products produced from a plurality of production facilities instead of each production facility having its own dedicated processing, bagging or packaging equipment. The overall cost of the equipment, of maintaining the equipment and the cost of labor to operate and maintain the equipment to be shared by a plurality of processing facility operators rather than each processing facility operator having to carry these costs on their own.

A disadvantage of such a sharing arrangement under which a single facility for processing, bagging or packaging frangible products is that the frangible products must be loaded at the facility at which they are produced, then transported to the processing, bagging or packaging facility, and then unloaded at the processing, bagging or packaging facility. Breakage and damage can occur during the loading, transportation and unloading of the frangible products, resulting in losses that undercut the advantage of sharing the processing, bagging and packaging facility.

US 2015/239677 A1 discloses a conveyor run for moving goods to two or more destinations which can be used to move a first fraction of the goods to a first destination and a second fraction of the goods to another destination. A drive motor coupled to a conveyor portion is reversible to enable the conveyor run to move goods in either direction along the conveyor run. An adjustable gate includes a rotatable sleeve with an opening that is positionable relative to conveyor portions between which the adjustable gate is connected. The rotatable sleeve rotates relative to the adjacent conveyor portions to position the opening to set the fraction of the goods that pass from an upstream conveyor portion to the downstream conveyor portion and to set the fraction of the goods that drop from the conveyor run through the opening.

US 6378688 B1 discloses a discharge gate mechanism or structure for proportioning a volume of goods between two flow streams. The gate discharge structure includes a one-piece tube having a gate discharge opening therein. A feed trough is connected to tube for reciprocal simultaneous movement with tube for moving the goods along trough and tube. A motor is effective to rotate tube and opening therein relative to feed trough to position discharge opening at a desired location for controlling the discharge of goods between two flow streams.

US 2002/170850 A1 discloses a conveyor sorting system and method which include a conveyor for transporting articles along a predetermined path and a pair of opposing chutes for receiving articles directed from the conveyor by a sorting device having a single paddle. The chutes are in communication with one another so that articles directed into either chute from the conveyor are directed to a common discharge end. The single paddle is operable to direct consecutively-spaced articles to opposing chutes that lead to the common discharge end.

US 2001/007300 A1 discloses a differential impulse conveyor which includes a conveyor base and a tray movable in a forward direction to move goods with the tray and in a backward direction to slide goods along the tray. A pair of tray support members interconnect the conveyor base in the tray. Each tray support member may be pivotally connected at a lower end of the conveyor base and pivotally connected at an upper end of the tray. An electrically powered linear motor moves the tray forward and rearward. A connector support for interconnecting the base and the tray, or for interconnecting any stationary member and a movable member, may include a linear bearing having an end surface with a radius for rolling engagement with a contact surface having a radius twice of that of the end surface to achieve the desired linear motion of the tray or movable member.

US 2002/130015 A1 discloses an excited frame conveyor with a conveyor bed movably supported on a frame having a structural frequency and a vibratory drive on the frame operable to vibrate the frame at an operational frequency that is greater than the structural frequency of the frame.

### BRIEF SUMMARY

The present invention provides a system for loading, transporting and unloading a large plurality of frangible products as disclosed in claim 1. One embodiment of the system for loading a large plurality of frangible products into totes for transportation of the frangible products that prevents unwanted breakage comprises a plurality of totes for use in being loaded with fragile products and for transporting the fragile products from a first location to a second location with minimal breakage, each tote includes a base, an open top, a removable lid sized to engage the open top of the tote to close the open top of the tote, a first side, a second side opposite the first side, a first end connected to the base, the first side and to the second side, a second end opposite the first end and connected to the base, the first side and to the second side, the first end having a gate with an upwardly curved shape on a lower portion of the gate, and a removable gate closure also having a correspondingly upwardly curved shape on a lower portion of the gate closure to removably engage the upwardly curved portion on the lower portion of the gate to close the gate, the gate closure being movable from a closed position, to close the gate and thereby retain the frangible products within the tote, to an open position to open the gate to allow the frangible products to be moved out of the tote through the open gate, and an interior space also having a surface with an upwardly curved shape, the upwardly curved-shaped surface of the interior space of the tote having a first steeply sloped portion proximal to an intersection between the first side and the open top of the tote, a lowermost portion proximal to the base of the tote, and a first transitionally sloped portion intermediate the lowermost portion of the surface of the interior space and the first steeply sloped portion of the surface of the interior space. The embodiment of the system further includes a loading station at a first location such as, for example, a production facility, the loading station including a reciprocating conveyor having a receiving portion at a first end at which the plurality of frangible products are received onto the reciprocating conveyor, a second end, a smooth surface intermediate the receiving portion at the first end and the second end for supporting and conveying a large plurality of the frangible products from the first end to the second end, and a lateral discharge portion at the second end at which the plurality of frangible products are removed from the reciprocating conveyor, the reciprocating conveyor operable by cyclically moving from a first position in a first direction and at a first rate of acceleration to move the products supported on the smooth surface a distance to a second position, and then by returning from the second position back to the first position by moving in a second direction that is opposite the first direction, at a second rate of acceleration that exceeds the magnitude of the first rate of acceleration to cause the products supported on the smooth surface to slide on the smooth surface. This type of conveyor is often referred to as a differential impulse conveyor or a reciprocating conveyor. The embodiment of the system further includes a tote platform at the loading station that is disposed laterally adjacent to the lateral discharge portion of the reciprocating conveyor, the tote platform having a top portion for engaging the base of a plurality of the totes, a first end of the top portion of the tote support for supporting the plurality of totes with the open tops of the plurality of totes disposed adjacent to the lateral discharge portion at the second end of the reciprocating conveyor such that frangible products discharged from the discharge portion of the reciprocating conveyor during operation of the reciprocating conveyor fall of the lateral discharge portion and downwardly to impinge on the first steeply sloped portion of the surface of the interior space of the tote proximal to the intersection between the first side and the open top of the tote to load the plurality of totes at the first end of the tote platform, the tote platform further having a second end to which the plurality of loaded totes can be moved after being filled with frangible product at the first end of the tote platform. It will be understood that during the initial loading of a totes at the loading station, the frangible products impinge on the first steeply sloped portion of the surface of the interior space of a tote and slide downwardly and then along the first transitionally sloped portion of the surface of the interior space of the tote and then onto the lowermost portion of the surface of the interior space of the tote.

In one embodiment of the system, each of the plurality of totes further includes a second transitionally sloped portion of the surface of the interior space of the tote that is opposite from the first transitionally sloped portion of the surface of the interior space of the tote, and the second transitionally sloped portion of the tote smoothly transitions with the lowermost portion of the surface of the interior space of the tote as does the first transitionally sloped portion of the surface of the interior space of the tote. Each of the plurality of totes further includes a second steeply sloped portion of the surface of the interior space of the tote that is opposite the first steeply sloped portion of the surface of the interior space of the tote. Together, the first steeply sloped portion, the second transitionally sloped portion adjacent to the first steeply sloped portion, the lowermost portion adjacent to the first transitionally sloped portion, the second transitionally sloped portion adjacent to the lowermost portion, and the second steeply sloped portion adjacent to the second transitionally sloped portion of the surface of the interior space of the tote, along with the first end with the gate closure in the closed position and the second end of the tote, and the removable lid, collectively make up the surfaces that surround and define the upwardly curved interior space of each of the plurality of the totes. Each of the first steeply sloped portion, the first transitionally sloped portion adjacent to and below the first steeply sloped portion, the lowermost portion adjacent to and below the first transitionally sloped portion, the second transitionally sloped portion adjacent to and above the lowermost portion, the second steeply sloped portion adjacent to and above the second transitionally sloped portion of the surface of the interior space, blend each with one or two of the adjacent surfaces to define a smooth and continuous surface of the interior space that is free of edges or obstacles that would abruptly engage or impact a frangible product as it is being loaded along with a plurality of frangible products through the open top (with lid removed from the tote) and into the interior space of the tote. It will be understood that impact with edges or obstacles would cause unwanted breakage of the frangible products. Initial loading of frangible products that impinge on the first steeply sloped portion of the tote causes the frangible products to slide without breakage downwardly along the first steeply sloped portion and then along the first transitionally sloped portion adjacent thereto and therebelow, and then along the lowermost portion of the interior space in a direction from the first side of the tote towards the second side of the tote, and then to begin sliding upwardly along the second transitionally shaped portion as the frangible products decelerate and slow down. Additional frangible products then cause the lowermost portion of the interior space begin to fill and the addition of still more frangible products may cause the frangible products that accumulate on the lowermost portion to shift as the weight of loading frangible products accumulates on one side, i.e. on the first side of the interior space adjacent to the first steeply sloped portion of the surface surrounding the interior space of the tote. The upwardly curved interior space can be loaded in this manner by frangible products spilling from the lateral discharge portion of the reciprocating conveyor with minimal breakage. A plurality of totes can be loaded by strategic placement of the totes on the first end of the tote platform. That is, loading of the plurality of totes occurs with the lid removed from the open top of each of the plurality of totes and the gate closures in the closed position to close the gates at the first ends of the plurality of totes, and with the bases of the totes supported on the first end of the top portion of the tote platform with the first side of the plurality of totes disposed proximal to and slightly below the edge of the lateral discharge portion at the second end of the reciprocating conveyor. In this arrangement, the reciprocating conveyor will convey a plurality of the frangible products to the lateral discharge portion of the reciprocating conveyor wherein the frangible products are discharged laterally from the lateral discharge portion of the reciprocating conveyor over the intersections between the first sides and the open tops of the plurality of totes on the first end of the tote platform and into the open tops of the plurality of totes to impinge on the first steeply sloped portions of the plurality of totes on the first end of the tote platform. The frangible products will impinge on the first steeply sloped portion of the interior space of each of the plurality of totes and the frangible products will slide down the first steeply sloped portion, then along the first transitionally sloped portion and then towards the lowermost portion of the interior space of each of the plurality of totes. Additional frangible products are discharged from the lateral discharge portion at the second end of the reciprocating conveyor into the open tops of the plurality of totes until the interior space of each of the plurality of totes is filled. The plurality of frangible products discharged into the plurality of totes can then be sealed by addition of the lid to close the open top and the frangible products may be kept fresh while being transported within the plurality of totes from the first location to a second location for, for example, processing, bagging and/or packaging.

In one embodiment of the system of the present invention, the system further comprises a switch that is operable for activating the reciprocating conveyor from a deactivated mode to an activated mode and for disengaging the reciprocating conveyor from the activated mode to the deactivated mode. The reciprocating conveyor can be disengaged using the switch to allow the loaded plurality of totes having interior spaces full of the frangible products to be vibrationally settled (as described in more detail below) within the totes, moved to a second end of the tote platform, removed for transportation and replaced with a plurality of empty totes for further loading of frangible products.

One embodiment of the system of the present invention further includes a vibration member coupled to the tote platform, the vibration member having an activated mode for imparting vibrations to the top portion of the tote platform to vibrationally settle the frangible products loaded into the interior space of the plurality of totes into a more densely packed configuration. After vibrational settling, the vibration member can be deactivated. Optionally, additional frangible products may be added to the totes after vibrational settling.

In one embodiment of the system of the present invention, the lateral discharge portion at the second end of the reciprocating conveyor is sized to discharge frangible products along a section of the reciprocating conveyor that is longer than the first side of one of the plurality of totes, and the first end of the tote platform is sized to accommodate at least two totes one beside the other and arranged in a configuration in which the first sides of each of the at least two totes are proximal to the discharge portion of the reciprocating conveyor so that frangible products discharged from the discharge portion of the reciprocating conveyor impinge upon the first steeply sloped portion of the surface of the interior space of each of the at least two totes. In another embodiment of the system of the present invention, the lateral discharge portion at the second end of the reciprocating conveyor is sized to laterally discharge frangible products along a section of the reciprocating conveyor that is at least twice as long as the first side of one of the plurality of totes, and the first end of the tote platform is sized to accommodate two or more totes arranged in a configuration in which the first sides of the two or more totes are proximal to the discharge portion of the reciprocating conveyor so that frangible products discharged from the discharge portion of the reciprocating conveyor impinge upon the first steeply sloped portion of the surface of the interior space of each of the two or more totes. This arrangement conveniently allows for efficient loading of two or more of the plurality of totes. In this arrangement, a first of the two or more totes is proximal to the first end of the reciprocating conveyor, a second of the two or more totes is distal to the first end of the reciprocating conveyor and the first side of the first of the two or more totes is aligned with and proximal to the first side of the second of the two or more totes on the first end of the top portion of the tote platform.

The arrangement discussed above enables two or more totes to be loaded with the frangible products delivered to the totes by the reciprocating conveyor in a sequential manner using accumulated product backpressure. More specifically, the lateral discharge portion of the reciprocating conveyor may include a downwardly sloped or pitched surface adjacent to the lateral edge that has no wall to retain the frangible products on the reciprocating conveyor. The side of the reciprocating conveyor opposite to the lateral discharge area includes a wall that prevents frangible products from leaving the reciprocating conveyor laterally in that direction, and the second end of the reciprocating conveyor may include an end wall that prevents frangible products from leaving the reciprocating conveyor by continued forward movement on the reciprocating conveyor. The lateral discharge portion of the reciprocating conveyor, therefore, is the only portion of the reciprocating conveyor that allows frangible products moved on the reciprocating conveyor to leave the conveying surface. In this arrangement, the first of the two or more totes that is proximal to the first end of the reciprocating conveyor will fill up first due to frangible product arriving at the lateral discharge portion of the reciprocating conveyor finding the path of least resistance off the conveying surface. Upon filling of the first of the two or more totes that is proximal to the first end of the reciprocating conveyor, accumulation of frangible products on the lateral discharge portion of the reciprocating conveyor begins to occur because frangible products have no room to leave the lateral discharge portion due to blockage by the loaded first tote. This results in backpressure against incoming additional frangible products that causes frangible products to move further downstream and to find a new path of least resistance off the lateral discharge portion and into the second of the two or more totes that is distal to the first end of the reciprocating conveyor. Upon filling of the second and perhaps additional totes of the two or more totes arranged on the top portion of the tote platform, the reciprocating conveyor can be temporarily deactivated, the frangible products in the two or more filled totes can be vibrationally settled by activation of a vibration member on the tote platform, and the two or more loaded totes can be moved to the second end of the tote platform for removal and transportation.

In one embodiment of the system of the present invention, the top surface of the tote platform of the loading station comprises a plurality of elongate and rotatable cylindrical rollers, each roller rotatably secured to a frame of the tote platform so that the axis of each roller is parallel to and in an aligned configuration with the axes of the others of the plurality of rollers to enable the plurality of loaded totes to be easily moved and conveyed from the first end of the tote platform and along and atop the plurality of rollers to a second end of the tote platform with minimal frictional resistance to movement of the loaded totes.

One embodiment of the system of the present invention further includes an unloading station at a second location that is spaced apart from the first location, the unloading station including a plurality of tributary troughs, each tributary trough having a first end for receiving a plurality of frangible products from a loaded tote that is being unloaded onto the tributary trough and a second end for discharging the plurality of fragile products to a receiving conveyor, wherein the second end of the tributary trough is at a lower elevation than the first end of the tributary trough to impart a decline to each of the plurality of tributary troughs. The system of the present invention further includes a plurality of tote supports at the unloading station, each tote support being disposed proximal to and at a lower elevation than the first end of one of the plurality of tributary troughs, each tote support having a first end, a second end and a stop member thereon to engage at least a portion of the base of a tote disposed on and supported on the tote support, the second end of each of the tote supports being at a lower elevation than the first end of the tote support to impart a decline to each of the tote supports, the decline being in the same direction as the decline of the one of the plurality of tributary troughs proximal to the tote support. Each of the plurality of tote supports and the one of tributary troughs disposed adjacent to each of the tote supports is configured so that a loaded tote disposed on the tote support is strategically positioned for discharging, upon removal of the gate closure from the first end of the tote, frangible products from the interior space of the tote, through the gate, and onto the first end of the tributary trough without unwanted breakage of the frangible products. That is, the lowermost point of the interior space, the lowermost point of the gate and the lowermost point of the conveying surface of the tributary trough are aligned one with the others so that the frangible products emerging from the interior space of the tote do not drop or fall an appreciable distance off of an upstream surface (i.e. from the interior space, or from the gate) onto a downstream surface (i.e. onto the gate, or onto the tributary trough). Preferably, the path from the lowermost point of the interior space of the tote, the lowermost point of the gate, and the lowermost point of the conveying surface of the tributary trough are all aligned and they further include the same profile. That is, the upwardly curved and concave cross-section profile of the interior space of the tote is matched by the profile of the gate, and the cross-sectional profile of the tributary trough matches that of the interior space of the tote and the gate. It will be understood that this arrangement minimizes breakage of frangible products by minimizing or eliminated edges or obstacles that could impact and break frangible products.

One embodiment of the unloading station of the system of the present invention includes a plurality of tote support vibration members, each tote support vibration member being coupled to one of the plurality of tote supports, each tote support vibration member being activatable to impart vibrations to the tote support to which it is coupled and to thereby impart vibrations to one of the plurality of totes supported thereon after the gate closure is removed to open the gate. The activation of the tote support vibration member, along the declined position of the tote on the tote support, causes the frangible products within the tote to gently move towards the gate, through the gate and onto the tributary trough. Optionally, a tributary trough vibration member can be used to promote movement of the frangible products from the first end of the tributary trough towards the second end of the tributary trough for being discharged to the receiving conveyor. Optionally, the tote support may be coupled to the first end of the tributary trough to enable the tote support vibration member to impart vibrations to both of the tote support and the tributary trough.

In one embodiment of the unloading station of the system of the present invention, a receiving conveyor is disposed proximal to the second ends of the plurality of tributary troughs to receive and convey frangible products discharged from the plurality of tributary troughs to one of a weighing machine, a packaging machine, a bagging machine and a processing facility at the second location. The receiving conveyor may be a reciprocating conveyor, a belt conveyor, or some other type of conventional conveyor. The unloading station is adapted for being used to gently unload a plurality of totes containing many various types of frangible products with minimal breakage.

Another aspect of the present invention provides a method of loading frangible product into totes as disclosed in claim 12. One embodiment of the method of filling two or more totes with frangible products for transportation of the frangible products comprises the steps of providing a plurality of totes, each tote having a base, an open top, a removable lid sized to engage the open top of the tote to close the open top, a first side, a second side, opposite the first side, a first end intermediate the first side and the second side, a second end opposite the first end and intermediate the first side and the second side, the first end having a gate with an upwardly concave shape, and a gate closure movable between a closed position to close the gate and an open position to open the gate, and an interior space defined by an upwardly concave surface, the upwardly concave surface having a first steeply sloped portion proximal to an intersection between the first side and the open top of the tote, a lowermost portion proximal to the base of the tote, and a first transitionally sloped portion intermediate the lowermost portion of the interior space and the first steeply sloped portion, then providing, at a first location, a reciprocating conveyor having a receiving portion at a first end at which the plurality of products are received onto the reciprocating conveyor, a second end, a smooth surface for supporting and conveying a large plurality of the frangible products from the first end towards the second end, and a lateral discharge portion proximal to the second end at which the plurality of frangible products are laterally removed from the reciprocating conveyor, the reciprocating conveyor operable by cyclically moving from a first position in a first direction and at a first rate of acceleration to move the products supported on the smooth surface a distance to a second position, and then returning from the second position to the first position by moving in a second direction, opposite the first direction, at a second rate of acceleration that exceeds the magnitude of the first rate of acceleration to cause the products supported on the smooth surface to slide on the smooth surface, and then further providing, at the first location, a tote platform having a top portion for engaging the base of the plurality of totes, a first end of the top portion for supporting the plurality of totes adjacent to the discharge portion at the second end of the reciprocating conveyor such that frangible products discharged from the discharge portion of the reciprocating conveyor fall downwardly and impinge on the first steeply sloped portion proximal to then intersection between the first side and the open top of the tote, the tote platform further having a second end to which a tote can be moved after being filled with frangible product at the first end of the tote platform. The embodiment of the method further includes the steps of positioning at least two of the plurality of totes, with the lid removed and the gate closure in the closed position to close the gate at the first end of the at least one tote, with the bases of the totes supported on the first end of the top portion of the tote platform with the first side of the at least two totes disposed proximal to and below the lateral discharge portion at the second end of the reciprocating conveyor, activating the reciprocating conveyor to convey a plurality of the frangible products to the lateral discharge portion of the reciprocating conveyor, discharging at least some of the plurality of the frangible products from the lateral discharge portion of the reciprocating conveyor over the intersection between the first side and the open top of the tote and into the open top of the tote on the tote platform and proximal to the first end of the reciprocating conveyor to impinge on the first steeply sloped portion, filling the tote on the tote platform that is proximal to the first end of the reciprocating conveyor until backpressure is created by an accumulation of frangible products along the edge of the lateral discharge portion adjacent to the tote on the tote platform that is proximal to the first end of the reciprocating conveyor, conveying incoming frangible products further down the reciprocating conveyor towards the second end of the reciprocating conveyor and towards the edge of the lateral discharge portion of the reciprocating conveyor that is adjacent to a tote that is distal to the first end of the reciprocating conveyor and adjacent to the tote that is proximal to the first end of the reciprocating conveyor, filling the tote on the tote platform that is distal to the first end of the reciprocating conveyor and adjacent to the tote that is proximal to the first end of the reciprocating conveyor with frangible products discharged from the edge of the lateral discharge portion of the reciprocating conveyor, deactivating the reciprocating conveyor, vibrationally settling the frangible products in the tote that is proximal to the first end of the reciprocating conveyor and in the tote that is distal to the first end of the reciprocating conveyor and transporting the frangible products in the tote that is proximal to the first end of the reciprocating conveyor and in the tote that is distal to the first end of the reciprocating conveyor to a second location, wherein filling the totes includes causing the frangible products slide down the first steeply sloped portion, along the first transitionally sloped portion and towards the lowermost portion of the interior space of the at least one tote. The plurality of frangible products discharged into the tote that is proximal to the first end of the reciprocating conveyor and in the tote that is distal to the first end of the reciprocating conveyor can be transported within the totes from the first location to a second location for one of processing, bagging and packaging.

An embodiment of the system of the present invention is described in detail using the following description which refers to drawings appended hereto. It will be understood that this is merely a single embodiment and is not limiting of the present invention.

### BRIEF DESCRIPTION OF THE SEVERAL VIEWS OF THE DRAWINGS

FIG. **1A** is an elevation end view of an embodiment of a tote for use in being gently loaded with fragile products, for transporting fragile products, and for gently unloading fragile products with minimal breakage in accordance with an embodiment of the system of the present invention.
FIG. **1B** is an elevation side view of the tote of FIG. **1A****.**
FIG. **2** is a perspective view of an embodiment of a loading station used at a first location to gently load a plurality of the totes of FIGs. **1A** and **1B** with minimal breakage.
FIG. **3** is the loading station of FIG. **2** illustrating how back pressure resulting from the filling of a first tote causes fragile product to progress further along the reciprocating conveyor to be discharged at a position to fill the second tote adjacent to the first tote.
FIG. **4** is the loading station of FIGs. **2** and **3** further illustrating how back pressure resulting from the filling of a first tote causes fragile product to progress further along the reciprocating conveyor to be discharged at a position to fill the second tote adjacent to the first tote.
FIG. **5** is the loading station of FIGs. **2-4** further illustrating how totes filled with product can be moved from a first end of the tote support to a second end of the tote support for being sealed with a lid and prepared for transportation to a second location for unloading of the fragile products for packaging, weighing, bagging or for processing.
FIG. **6** is an illustration of a truck being loaded with totes filled with frangible products at a first location for transport to a second location.
FIG. **7** is a perspective view of one embodiment of an unloading station at a second location at which totes filled with frangible products can be gently unloaded with minimal breakage.
FIG. **8** is an elevation view of a tote filled with frangible products (not shown) is supported on a tote support in alignment with a tributary trough for gently unloading the tote filled with frangible products to a receiving conveyor (not shown).
FIG. **9** is the perspective view of the unloading station of FIG. **7** as frangible products are being gently unloaded from a tote through the tributary trough and to the receiving conveyor for being conveyed to weighing and bagging machines.

### DETAILED DESCRIPTION

Some embodiments of the system of the present invention include a loading station at a first location at which a plurality of totes are gently loaded with a plurality of frangible products such as, for example, potato chips, one or more trucks for transporting the totes filled with the frangible products to a second location, and an unloading station at the second location at which the plurality of totes are gently unloaded and the frangible products transported in the plurality of totes are routed to a receiving conveyor that conveys the stream of frangible products to one of a weighing machine, a bagging machine, a packaging machine and a processing machine.

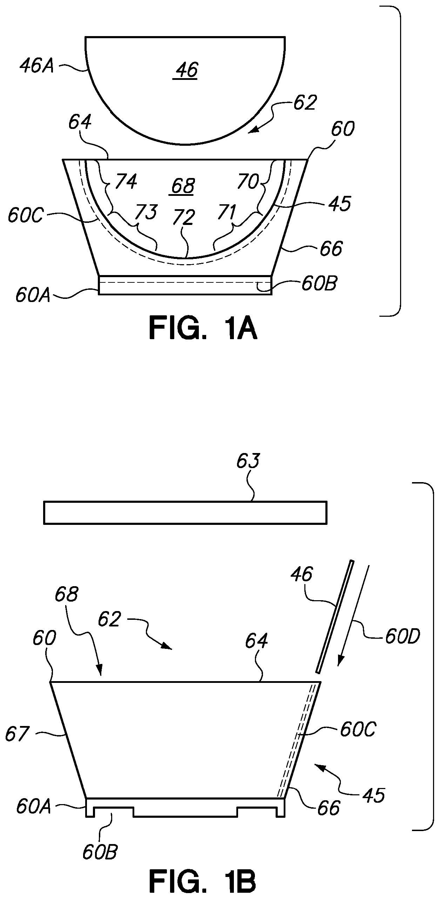

FIG. **1A** is an elevation end view of an embodiment of a tote **60** for use in being gently loaded with fragile products **50** (not shown in FIGs. **1A** and **1B**), for transporting fragile products **50,** and for gently unloading fragile products with minimal breakage in accordance with an embodiment of the system of the present invention. Embodiments of the system of the present invention include a plurality of totes **60.** As shown in FIG. **1A****,** each tote **60** includes a base **60A,** a top **64,** an opening **62** in the top **64** opposite to the base **60A,** a first end **66,** a gate **45** in the first end **66,** a second end **67** (not shown in FIG. **1A**), a gate closure **46** removably receivable to close the gate **45.** Optionally, the base **60A** includes one or more channels **60B** for receiving forks of a fork lift machine (not shown in FIG. **1A**) for lifting and moving the tote **60.** The tote **60** further includes an upwardly curved and concave interior space **68** for gently receiving and storing frangible products **50** (not shown in FIG. **1A**) for transportation. The interior space **68** is defined by a first steeply sloped wall portion **70,** a first transitionally sloped wall portion **71** adjacent to the first steeply sloped wall portion **70,** a lowermost portion **72** proximal to the base **60A** and adjacent to the first transitionally sloped wall portion **71,** a second transitionally sloped wall portion **73** adjacent to the lowermost portion **72** and opposite the first transitionally sloped wall portion **71,** and a second steeply sloped wall portion **74** adjacent to the second steeply sloped wall portion **73** and opposite the first steeply sloped wall portion **70.** These five wall portions, the first steeply sloped wall portion **70,** the first transitionally sloped wall portion **71,** the lowermost portion **72,** the second transitionally sloped wall portion **73,** and the second steeply sloped wall portion **74,** together define the surfaces that surround and define the interior space **68** of the tote **60** and together form an upwardly curved cross-sectional profile as shown in FIG. **1A****.** The frangible product (not shown) can be introduced into the interior space **68** in a specific manner that reduces or minimizes breakage, as will be discussed below in connection with the loading station **100.**

The tote **60** may further include a peripheral slot **60C** along the gate **45** at the first end **66** of the tote **60** for receiving the edge **46A** of the correspondingly shaped gate closure **46.** The peripheral slot **60C** is open at the top **64** for receiving the gate closure **46.** The tote **60** may comprise a number of various materials that are of sufficient strength and rigidity and that are adapted for easy cleaning, but is preferably formed of plastic.

FIG. **1B** is an elevation side view of the tote **60** of FIG. **1A.** FIG. **1B** shows the second end **67** of the tote **60** and the base **60A** which includes channels **60B** corresponding to the size and positions of forks of a fork lift truck (not shown) that may be used for moving the totes **60.** The dotted lines in FIG. **1B** reveal a perimeter channel **60C** surrounding the gate **45** into which the gate closure **46** may be slid to close or open the gate **45**. For example, but not by way of limitation, the gate closure **46** may be aligned with the perimeter channel **60C** as shown in FIG. **1B**, then inserted into the perimeter channel **60C** by moving the aligned gate closure **60C** in the direction of the arrow **60D** until the gate **45** is closed. The tote **60** can then be used at a loading station at the first location to gently receive and store frangible products **50.** Once gently filled with frangible products, the tote **60** can be closed by securing a lid **63** to close the open top **64** for transportation to a second location having an unloading station.

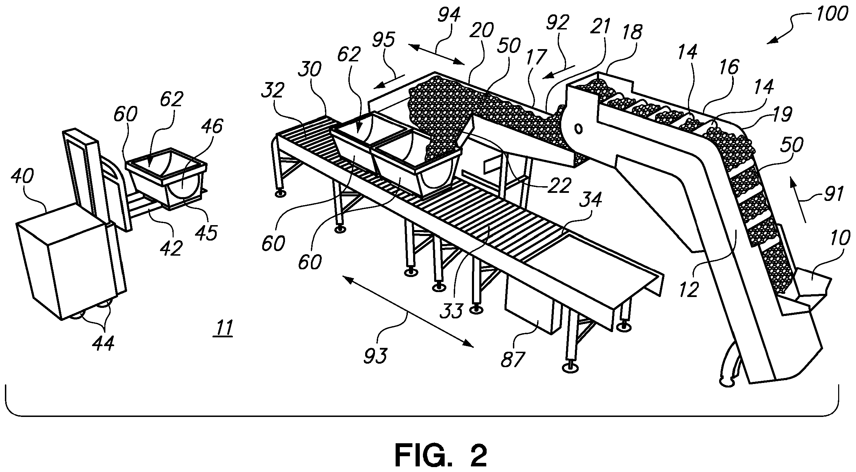

FIG. **2** is a perspective view of an embodiment of a loading station **100** used at a first location to load a plurality of the totes **60** of FIGs. **1A** and **1B** with minimal breakage. The loading station **100** includes a reciprocating conveyor **20** having a receiving portion **21** to receive a stream of a plurality of frangible products **50** from a supply conveyor **10**, a lateral discharge portion **22** for discharging a stream of a plurality of frangible products **50** from the reciprocating conveyor **20**, a tote platform **30** having a first end **32,** a second end **34,** a plurality of parallel and rotatable rollers **33**, and a vibration member **87.** The vibration member **87** is activatable to impart vibrations to the tote platform **30** for vibrationally settling frangible products **50** loaded into a tote **60** into a more densely packed configuration. The supply conveyor **10** shown in FIG. **2** is an escalator-type supply conveyor **10** having a plurality of spaced-apart baffles **14** for engaging and supporting frangible product **50** as it is lifted in the direction of arrow **91** towards the discharge end **18** of the supply conveyor **10** and onto the receiving portion **21** of the reciprocating conveyor **20**. The reciprocating conveyor **20** reciprocates in the direction of the double-headed arrow **94** at a first rate of acceleration to move the frangible product **50** then residing on the reciprocating conveyor **20** in the forward direction towards the left end of the double-headed arrow **94** and then at a second rate of acceleration that is greater than the first rate of acceleration in the reverse and opposite direction towards the right end of the double-headed arrow **94** to cause the frangible products **50** residing thereon to slip on the reciprocating conveyor **20**. This cyclic action moves the frangible products **50** along the reciprocating conveyor **20** and then in the direction of the arrow **95** towards the lateral discharge portion **22** due to the side wall barrier **17** preventing the frangible products **50** from exiting the reciprocating conveyor **20** at any other position other than the lateral discharge portion **22**.

FIG. **2** further shows a fork lift machine **40** having a plurality of wheels **44** and a pair of co-extending forks **42** for being received into the channels **60B** (see FIG. **1B**) on the base **60A** of the totes **60** for stably supporting the totes **60** during movement within the first location. More specifically, as is shown in FIG. **2**, the fork lift machine **40** is used to transport empty totes **60** to the tote platform **30** for loading by the reciprocating conveyor **20** and the fork lift machine **40** is used to transport loaded totes **60** from the tote platform **30** for transportation from the first location housing the loading station **100** to a second location housing an unloading station **200**. It can be seen in FIG. **2** that the tote **60** being transported on the fork lift machine **40** and the pair of totes **60** supported on the first end **32** of the tote platform **30** all have the gate closure **46** in the closed position to close the gate **45** of the tote **60** and the lid **63** removed so that the totes **60** can be loaded at the loading station **100**.

FIG. **2** shows a pair of totes **60** supported on the first end **32** of the tote platform **30** in position with the first side **66** disposed proximal to and slightly beneath the lateral discharge portion **22** of the reciprocating conveyor **20**. FIG. **2** also shows how the initial loading occurs in the tote **60** to the right that is proximal to the first end **21** of the reciprocating conveyor **20** due to the path of least resistance at that time allowing frangible goods **50** to exit the reciprocating conveyor **20** via the lateral discharge portion **22** adjacent to the rightmost tote **60**. It will be noted that the leftmost tote **60** in FIG. **2** that is distal to the first end **21** of the tote **60** remains empty as the rightmost tote **60** is filled.

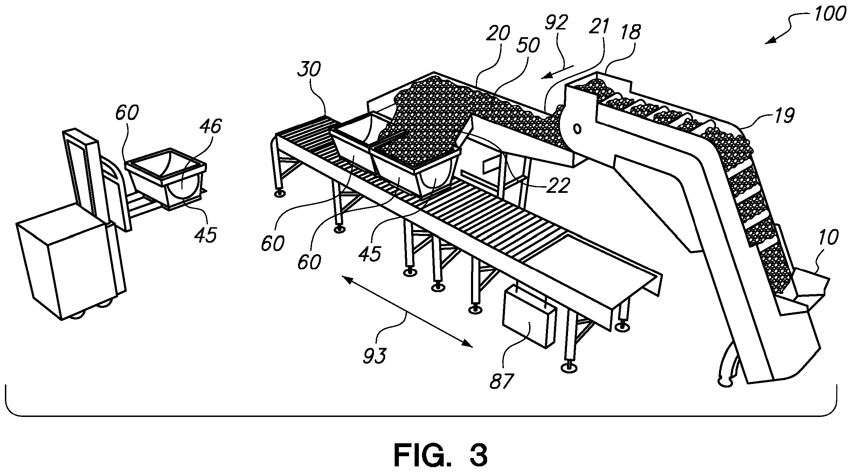

FIG. **3** is the loading station **100** of FIG. **2** illustrating how back pressure resulting from the filling of a rightmost tote **60** causes fragile products **50** to progress further along the reciprocating conveyor **20** to be discharged at a position on the lateral discharge portion **22** of the reciprocating conveyor **20** to begin filling the leftmost tote **60** adjacent to the rightmost tote **60** on the tote platform **30**. The filling of the rightmost tote **60** results in backpressure or crowding that impedes the continued flow of frangible products **50** from entering the opening **62** of the rightmost tote **60** and this causes movement of incoming frangible products **50** on the reciprocating conveyor **20** to flow further down the reciprocating conveyor **20** towards the leftmost tote **60** as the path of least resistance shifts. Continued operation of the supply conveyor **10** and the reciprocating conveyor **20** results in frangible products **50** being discharged from the lateral discharge portion **22** of the reciprocating conveyor **20** into the leftmost tote **60** on the tote platform **30**.

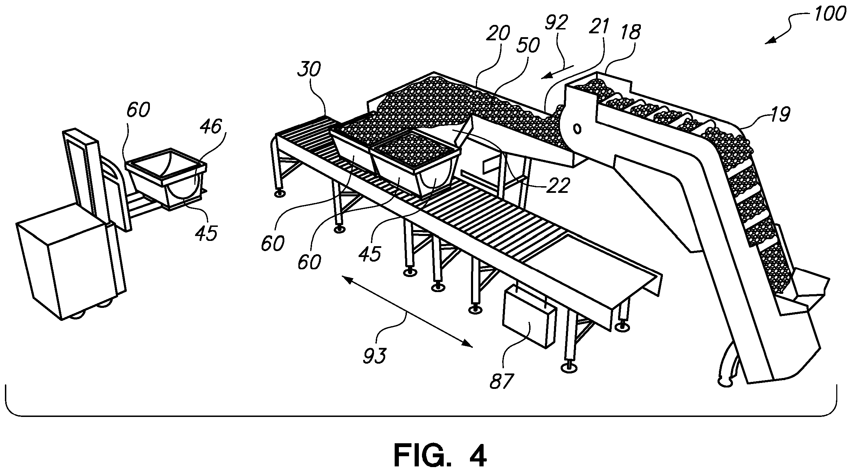

FIG. **4** is the loading station **100** of FIGs. **2** and **3** further illustrating how back pressure and crowding resulting from the filling of a rightmost tote **60** causes fragile products **50** to progress further along the reciprocating conveyor **20** to be discharged at a position to fill the leftmost tote **60** adjacent to the rightmost tote **60**. Once both of the rightmost tote **60** and the leftmost tote **60** shown in FIG. **4** are filled with frangible products **50** as shown in FIG. **4**, the supply conveyor **10** and the reciprocating conveyor **20** can be deactivated to prevent further discharge of frangible products **50** from the lateral discharge portion **22** of the reciprocating conveyor **20**. At this juncture, the vibration member **87** can be activated to begin vibrationally settling of the frangible products **50** loaded into the leftmost tote **60** and the rightmost tote **60** to provide a more densely packed configuration of the frangible products **50** within the totes **60**. It will be noted that the deactivation of the supply conveyor **10** and the reciprocating conveyor **20** prevents frangible products **50** from being discharged from the lateral discharge portion **22** of the reciprocating conveyor **20** as vibrational settling occurs.

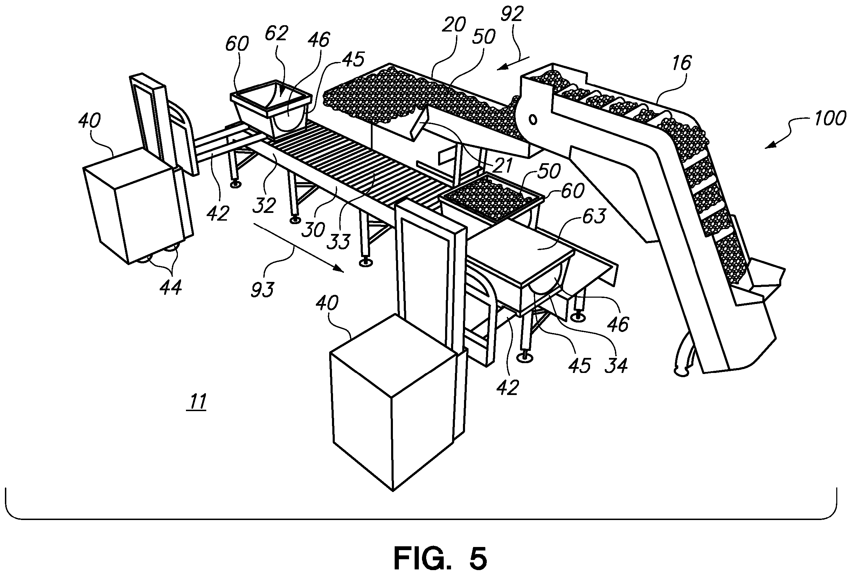

FIG. **5** is the loading station **100** of FIGs. **2-4** further illustrating how totes **60** filled with frangible product **50** can be moved from a first end **32** of the tote platform **30** to a second end **34** of the tote platform **30** for being sealed with a lid **63** and prepared for transportation to a second location (not shown) for unloading of the fragile products **50** for packaging, weighing, bagging or for processing. The loaded totes **60** containing fragile products **50** in a densely packed configuration can be easily moved along the rollers **33** of the tote platform **30** from the first end **32** to the second end **34.** FIG. **5** shows the rightmost tote **60** having a lid **63** in place to seal the contents and to thereby preserve freshness during transport. The loaded and sealed totes **60** can then be removed using the fork lift machine **40** and loaded into a truck for transport.

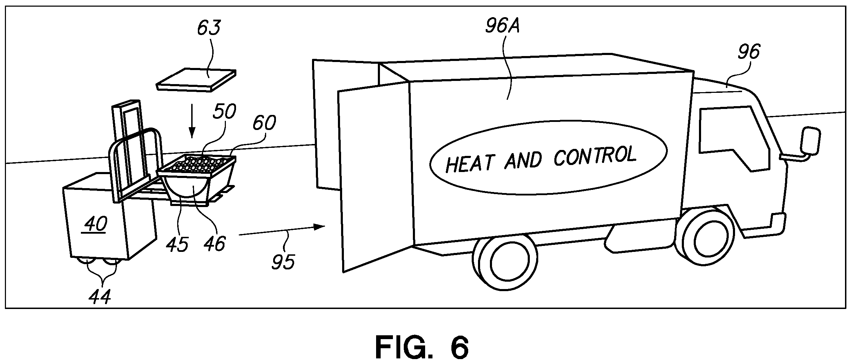

FIG. **6** is an illustration of a truck **96** having a cargo hold **96A** being loaded with totes **60** filled with frangible products **50** at a first location for transport to a second location. The fork lift machine **40** moves on wheels **44** and carries a tote **40** loaded with frangible products **50** and sealed with lid **63** in the direction of the arrow **95** for loading into the cargo hold **96A** of the truck **96**. In one embodiment of the system of the present invention, nitrogen or some other inert gas can be introduced into the tote **40** prior to sealing with the lid **63** to promote freshness and to prevent staleness during transportation. It will be understood that certain safety precautions must be taken wherever nitrogen or other inert gas is used to prevent unwanted depletion of oxygen levels where personnel may enter.

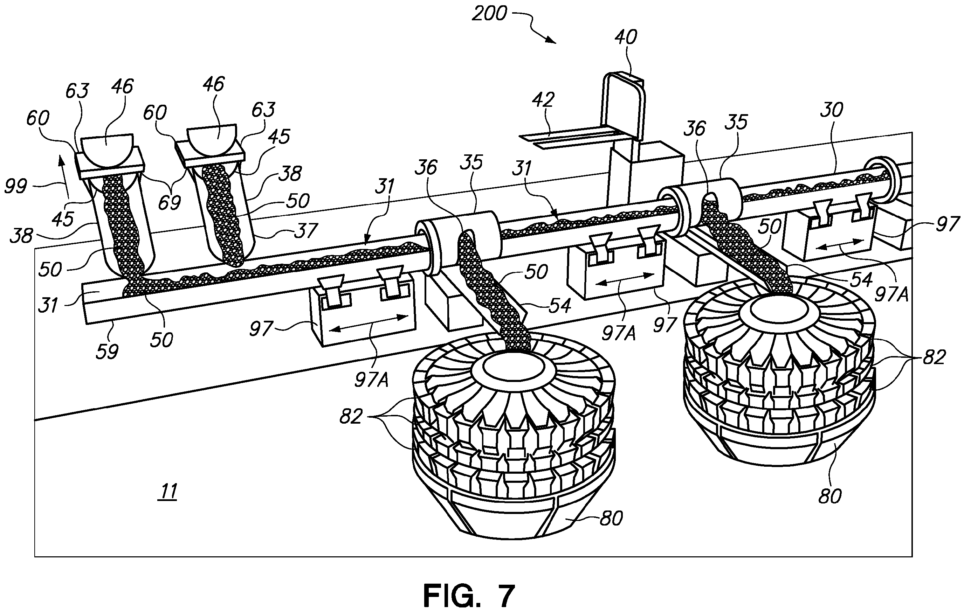

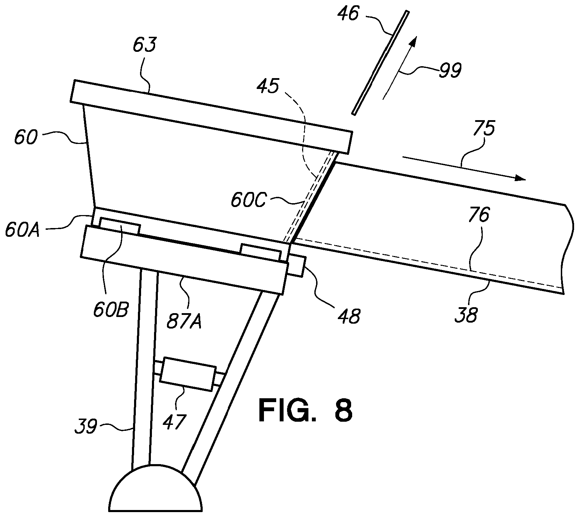

FIG. **7** is a perspective view of one embodiment of an unloading station **200** at a second location at which totes **60** loaded with frangible products **50** can be gently unloaded with minimal breakage. The unloading station **200** includes a pair of tributary troughs **38**, each of the tributary troughs **38** having a first end **69** disposed proximal to a tote support **39** (not shown in FIG. **7** - see FIG. **8**), and a second end **37** disposed proximal to a receiving conveyor **59**. The second end **37** of each of the tributary troughs **38** is disposed at a lower elevation than the first end **69** to impart a decline to each tributary trough **38** that aids in the movement of frangible products **50** there along. Each of the tote supports **39** (not shown) supports a tote **60** thereon in a position with the gate **45** aligned with the first end **69** of the adjacent tributary trough **38** to enable frangible products **50** to move from the interior space **68** of the tote **60**, through the open gate **45** (with the gate closure **46** removed) and onto the first end **69** of the tributary trough **38**. The frangible products **50** then move downwardly along the tributary trough **38** and are discharged from the tributary trough **38** at a second end **37** onto the receiving conveyor **59**.

The receiving conveyor **59** shown in FIG. **7** is a reciprocating conveyor powered by a plurality of reciprocating drivers **97** that move the receiving conveyor **59** back and forth as shown by arrows **97A**. The receiving conveyor **59** further includes a plurality of adjustable side-discharging gates **35**, each having an opening **36** that can be positioned to vary the rate at which the frangible products **50** delivered to the receiving conveyor **59** from the totes **60** are discharged from the receiving conveyor **59** to feeder troughs **54** that deliver the frangible products **50** to the weighing and bagging machines 80. The receiving conveyor **59** includes side walls **30** that straddle a trough **31** in which the frangible products **50** move. The receiving conveyor **59** may be of the kind described and disclosed in U.S. Patent 6,527,104, U.S. Patent 8,066,114, U.S. Patent 6,189,683 and U.S. Patent 6,286,665. The adjustable side-discharging gates may be of the kind described and disclosed in U.S. Patent 9,567,163 and U.S. Patent 6,286,665.

FIG. **8** is a side elevation view of a tote **60** filled with frangible products **50** (not shown) and sealed with a lid **63** is supported on a tote support **39** to position the loaded tote **60** in alignment with a tributary trough **38** for gently unloading the tote **60** filled with frangible products **50** to the receiving conveyor (not shown). The gate closure **46** is removed from the peripheral slot **60C** by moving the gate closure **46** in the direction indicated by the arrow **99** to open the gate **45**. The loaded tote **60** is placed in the position shown in FIG. **8**. The tote support **39** may be equipped with a tote support vibration member **47** that is activatable to impart vibrations to the tote **60** supported on the tote support **39**. The tote support **39** further includes a support member **87A** having a stop **77** thereon to engage the base **60A** of the tote **60** to maintain the tote **60** in position on the tote support **39** notwithstanding the declined position that promotes movement of the frangible products **50** (not shown) from the interior space (not shown) of the tote **60** and in the direction of the arrow **75** onto the tributary trough **38**. The dotted line **76** indicates the position of the lowermost point of the tributary trough **38**. Preferably, the lowermost point of the tributary trough **76** is aligned with the lowermost portion **72** of the interior space **68** (see FIG. **1A**) to avoid any unwanted abrupt drops or falls that can cause breakage of the frangible products **50**.

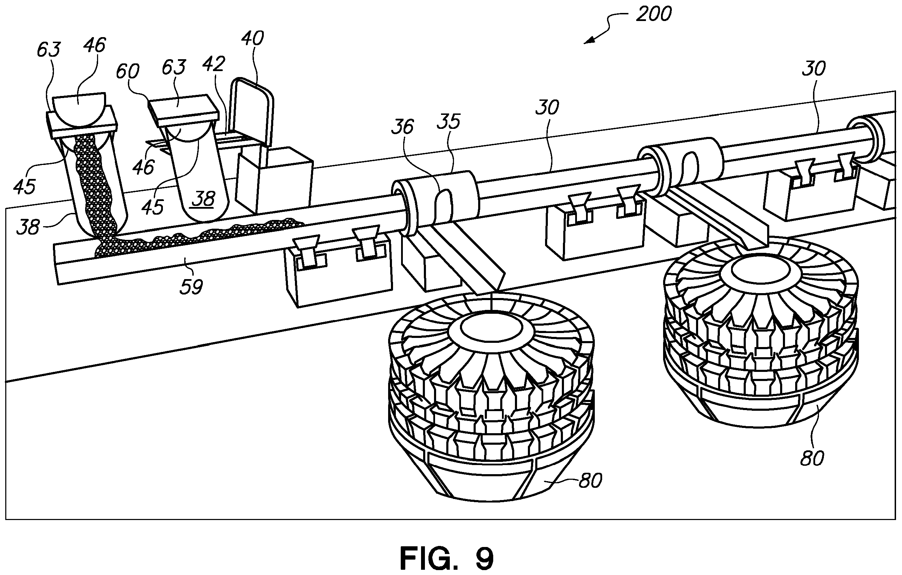

FIG. **9** is the perspective view of the unloading station **200** of FIG. **7** as frangible products **50** are being gently unloaded from a leftmost tote **60** onto the tributary trough **38** and to the receiving conveyor **59** for being conveyed to weighing and bagging machines **80** as a loaded rightmost tote **60** is being positioned atop the tote support **39** (not shown) by a fork lift machine **40**. It can be seen that at this initial stage, the frangible products **50** unloaded from the leftmost tote **38** have not yet moved a sufficient distance on the receiving conveyor **59** to reach the leftmost adjustable side discharging gate **35** in the receiving conveyor **59** that discharges all or an adjustable fraction of the incoming stream of frangible products **50** to the leftmost weighing and bagging machine **80.**

The terminology used herein is for the purpose of describing particular embodiments only and is not intended to be limiting of the invention. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, components and/or groups, but do not preclude the presence or addition of one or more other features, integers, steps, operations, elements, components, and/or groups thereof. The terms "preferably," "preferred," "prefer," "optionally," "may," and similar terms are used to indicate that an item, condition or step being referred to is an optional (not required) feature of the invention.

The description of the present invention has been presented for purposes of illustration and description, but it is not intended to be exhaustive or limited to the invention in the form disclosed. Many modifications and variations will be apparent to those of ordinary skill in the art without departing from the scope of the invention as defined in the appended claims.

"Frangible products," as that term is used herein, includes food portions that are easily broken such as, for example, potato chips or pretzels, but may also refer to non-edible articles that are produced, packaged, weighed, or sold in large quantities.

## Claims

1. A system for loading, transporting and unloading a plurality of frangible products (50) that prevents unwanted breakage, the system comprising:
a plurality of totes (60), each tote having a base (60A), an open top (62, 64), a removable lid (63) sized to engage the open top of the tote to close the open top, a first side, a second side, opposite the first side, a first end (66) intermediate the first side and the second side, a second end (67) opposite the first end and intermediate the first side and the second side, the first end having a gate (45) with an upwardly curved shape, and a gate closure (46) having an upwardly curved shape corresponding to that of the gate and movable between a closed position to close the gate and an open position to open the gate, and an interior space (68) defined by an upwardly curved surface of an interior space, the upwardly curved surface having a first steeply sloped portion (70) proximal to an intersection between the first side and the open top of the tote, a lowermost portion (72) proximal to the base of the tote, and a first transitionally sloped portion (71) intermediate the lowermost portion of the surface of the interior space and the first steeply sloped portion of the surface of the interior space;
a loading station (100) at a first location, the loading station including:
a reciprocating conveyor (20) having a receiving portion (21) at a first end at which the plurality of products (50) are received onto the reciprocating conveyor, a second end, a smooth surface for supporting and conveying a large plurality of the frangible products from the first end towards the second end, and a lateral discharge portion (22) proximal to the second end at which the plurality of frangible products are laterally removed from the reciprocating conveyor, the reciprocating conveyor operable by cyclically moving from a first position in a first direction and at a first rate of acceleration to a second position, and then by returning from the second position to the first position by moving in a second direction, opposite the first direction, at a second rate of acceleration that exceeds the magnitude of the first rate of acceleration to cause the products supported on the smooth surface to slide on the smooth surface;
a tote platform (30) having a top portion for engaging the base of the plurality of totes, a first end (32) of the top portion for supporting the plurality of totes (60) adjacent to the discharge portion (22) proximal to the second end of the reciprocating conveyor (20) such that frangible products discharged from the discharge portion (22) of the reciprocating conveyor fall downwardly and impinge on the first steeply sloped portion (70) of the surface of the interior space of the tote proximal to the intersection between the first side and the open top (62, 64) of the tote, the tote platform further having a second end (34) to which a tote can be moved after being filled with frangible products at the first end of the tote platform;
wherein at least one of the plurality of totes (60), with the lid (63) removed and the gate closure (46) in the closed position to close the gate (45) at the first end of the at least one tote, is placed with its base supported on the first end (32) of the top portion of the tote platform with the first side of the at least one tote disposed proximal to and below the discharge portion (22) at the second end of the reciprocating conveyor;
wherein the reciprocating conveyor (20) conveys a plurality of the frangible products (50) to the lateral discharge portion (22) of the reciprocating conveyor;
wherein the frangible products (50) are discharged from the lateral discharge portion (22) of the reciprocating conveyor over the intersection between the first side and the open top (62, 64) of the tote and into the open top of the at least one tote to impinge on the first steeply sloped portion (70);
wherein the frangible products (50) slide down the first steeply sloped portion (70), along the first transitionally sloped portion (71) and towards the lowermost portion (72) of the interior space (68) of the at least one tote (60);
wherein additional frangible products (50) are discharged from the lateral discharge portion (22) proximal to the second end of the reciprocating conveyor into the open top (62, 64) of the at least one tote (60) until the interior space (68) of the at least one tote is filled; and
wherein the plurality of frangible products (50) discharged into the at least one tote (60) can be transported within the at least one tote from the first location to a second location for one of processing, bagging and packaging.

2. The system of claim 1, further comprising:
wherein the reciprocating conveyor (20) includes a switch operable for activating the reciprocating conveyor from a deactivated mode to an activated mode and for disengaging the reciprocating conveyor from the activated mode to the deactivated mode;
wherein the reciprocating conveyor (20) can be disengaged using the switch to allow one or more of the plurality of totes (60) having one or more interior spaces (68) full of the frangible products (50) is removed and replaced with an empty tote.

3. The system of claim 2, further comprising:
a vibration member (87) coupled to the tote platform (30), the vibration member having an activated mode, for imparting vibrations to the top portion of the tote platform to vibrationally settle the frangible products (50) loaded into the interior space of the at least one tote into a densely packed configuration for being transported, and a deactivated mode.

4. The system of claim 1, wherein the discharge portion (22) proximal to the second end of the reciprocating conveyor (20) is sized to discharge frangible products (50) along a section of the reciprocating conveyor that is longer than the first side of the at least one tote (60); and
wherein the first end of the tote platform (30) is sized to accommodate at least two totes (60) arranged in a configuration in which the first sides of each of the at least two totes are proximal to the discharge portion (22) of the reciprocating conveyor (20) so that frangible products discharged from the discharge portion of the reciprocating conveyor impinge upon the first steeply sloped portion (70) of each of the at least two totes.

5. The system of claim 4, wherein a first tote (60) of the at least two totes is proximal to the first end of the reciprocating conveyor (20);
wherein a second tote (60) of the at least two totes is distal to the first end of the reciprocating conveyor; and
wherein the first side of the first tote of the at least two totes is aligned with and proximal to the first side of the second tote of the at least two totes on the first end of the top portion of the tote platform (30).

6. The system of claim 1, wherein the tote platform (30) comprises a plurality of elongate cylindrical rollers (33), each having an axis, each roller rotatably secured to a frame of the tote platform in an aligned configuration with the other of the plurality of rollers to enable the plurality of totes (60) to be conveyed along the plurality of rollers from the first end of the tote platform to a second end of the tote platform with minimal frictional resistance to movement of the totes.

7. The system of claim 1, further comprising:
an unloading station (200) at a second location spaced apart from the first location, the unloading station including:
a plurality of tributary troughs (38), each tributary trough having a first end (69) for receiving a plurality of frangible products, a second end (37) for discharging the plurality of fragile products, wherein the second end is at a lower elevation than the first end to impart a decline to each of the plurality of tributary troughs;
a plurality of tote supports (39), each tote support disposed proximal to the first end of one of the plurality of tributary troughs (38), each tote support having a first end, a second end and a stop member (77) to engage the base (60A) of a tote (60) supported on the tote support and to retain the tote on the tote support, the second end (37) of each of the tote supports (39) being at a lower elevation than the first end of the tote support to impart a decline to each of the tote supports, the decline being in the same direction as the decline of the one of the plurality of tributary troughs (38) to which the tote support is proximal;
a plurality of tote support vibration members (47), each tote support vibration member being coupled to one of the plurality of tote supports (39), each tote support vibration member being activatable to impart vibrations to the tote support to which it is coupled and to thereby impart vibrations to one of the plurality of totes (60) supported thereon; and
a receiving conveyor (59) disposed proximal to the second ends (37) of the plurality of tributary troughs (38) to receive and convey frangible products discharged from the plurality of tributary troughs to one of a weighing machine, a packaging machine, a bagging machine and a processing facility at the second location;
wherein the plurality of totes (60) loaded with frangible products and transported from the first location to the second location are disposed on the plurality of tote supports (39);
wherein the gate closure (46) is moved to open the gate (45) in each of the plurality of totes supported on the tote supports;
wherein each of the plurality of tote support vibration members (47) is activatable to impart vibrations to the one of the plurality of tote supports (39) to which it is coupled and to impart vibrations to one of the plurality of loaded tote supports supported thereon to cause frangible food portions (50) to move out of the interior space of the tote support and onto the first end of the tributary trough (38) to which the tote support is proximal; and
wherein each of the plurality of tributary troughs (38) discharges the frangible products onto the receiving conveyor (59) which conveys the frangible products to one of a weighing machine, bagging machine, packaging machine and processing facility at the second location.

8. The system of claim 7, wherein the receiving conveyor (59) is a reciprocating conveyor.

9. The system of claim 7, wherein a cross-sectional shape of at least one of the tributary troughs (38) conforms to a cross-sectional shape of the interior space of at least one of the totes (60).

10. The system of claim 7, wherein a lowermost portion (76) of each of the plurality of tributary troughs (38) is aligned with the lowermost portion (72) of the interior space of one of the plurality of totes (60) supported on one of the plurality of tote supports (39) proximal to the first end of the at least one of the tributary troughs.

11. The system of claim 1, wherein the at least one tote (60) is two or more totes aligned on the first end of the tote platform (30) with the first side of each of the two or more totes is aligned with the first side of the others of the two or more totes, and the first sides of the two or more totes are proximal to and below an edge of the lateral discharge portion (22) of the reciprocating conveyor (20);
wherein the lateral discharge portion (22) of the reciprocating conveyor (20) is substantially longer than the first side of the two or more totes (60) to enable filling of the two or more totes by discharging frangible products (50) from the edge of the lateral discharge portion of the reciprocating conveyor; and
wherein one of the two or more totes (60) that is proximal to the first end of the reciprocating conveyor (20) fills until backpressure results from filling of the one of the two or more totes that is proximal to the first end of the reciprocating conveyor that causes incoming frangible products (50) moving on the reciprocating conveyor (20) to move further towards the second end of the reciprocating conveyor and to then be discharged from the lateral discharge portion (22) of the reciprocating conveyor (20) into a second of the two or more totes that is disposed adjacent to the first of the two or more totes.

12. A method of filling two or more totes (60) with frangible products (50) for transportation of the frangible products, comprising:
providing a plurality of totes (60), each tote having a base (60A), an open top (62, 64), a removable lid (63) sized to engage the open top of the tote to close the open top, a first side, a second side, opposite the first side, a first end (66) intermediate the first side and the second side, a second end (67) opposite the first end and intermediate the first side and the second side, the first end having a gate (45) with an upwardly concave shape, and a gate closure (46) movable between a closed position to close the gate and an open position to open the gate, and an interior space (68) defined by an upwardly concave surface, the upwardly concave surface having a first steeply sloped portion (70) proximal to an intersection between the first side and the open top of the tote, a lowermost portion (72) proximal to the base of the tote, and a first transitionally sloped portion (71) intermediate the lowermost portion of the interior space and the first steeply sloped portion;
providing, at a first location, a reciprocating conveyor (20) having a receiving portion (21) at a first end at which the plurality of products (50) are received onto the reciprocating conveyor, a second end, a smooth surface for supporting and conveying a large plurality of the frangible products from the first end towards the second end, and a lateral discharge portion (22) proximal to the second end at which the plurality of frangible products are laterally removed from the reciprocating conveyor, the reciprocating conveyor operable by cyclically moving from a first position in a first direction and at a first rate of acceleration to move the products supported on the smooth surface a distance to a second position, and then returning from the second position to the first position by moving in a second direction, opposite the first direction, at a second rate of acceleration that exceeds the magnitude of the first rate of acceleration to cause the products supported on the smooth surface to slide on the smooth surface;
providing, at the first location, a tote platform (30) having a top portion for engaging the base of the plurality of totes, a first end (32) of the top portion for supporting the plurality of totes (60) adjacent to the discharge portion (22) at the second end of the reciprocating conveyor (20) such that frangible products discharged from the discharge portion (22) of the reciprocating conveyor fall downwardly and impinge on the first steeply sloped portion (70) proximal to then intersection between the first side and the open top (62, 64) of the tote, the tote platform further having a second end (34) to which a tote can be moved after being filled with frangible product at the first end of the tote platform;
positioning at least two of the plurality of totes (60), with the lid (63) removed and the gate closure (46) in the closed position to close the gate (45) at the first end of the at least one tote, with the bases of the totes supported on the first end (32) of the top portion of the tote platform with the first side of the at least two totes disposed proximal to and below the lateral discharge portion (22) at the second end of the reciprocating conveyor;
activating the reciprocating conveyor (20) to convey a plurality of the frangible products (50) to the lateral discharge portion (22) of the reciprocating conveyor;
discharging at least some of the plurality of the frangible products (50) from the lateral discharge portion (22) of the reciprocating conveyor over the intersection between the first side and the open top (62, 64) of the tote and into the open top of the tote on the tote platform and proximal to the first end of the reciprocating conveyor to impinge on the first steeply sloped portion (70);
filling the tote (60) on the tote platform (30) that is proximal to the first end of the reciprocating conveyor until backpressure is created by an accumulation of frangible products along the edge of the lateral discharge portion (22) adjacent to the tote on the tote platform that is proximal to the first end of the reciprocating conveyor (20);
conveying incoming frangible products further down the reciprocating conveyor (20) towards the second end of the reciprocating conveyor and towards the edge of the lateral discharge portion (22) of the reciprocating conveyor that is adjacent to a tote that is distal to the first end of the reciprocating conveyor and adjacent to the tote (60) that is proximal to the first end of the reciprocating conveyor;
filling the tote (60) on the tote platform (30) that is distal to the first end of the reciprocating conveyor and adjacent to the tote that is proximal to the first end of the reciprocating conveyor with frangible products discharged from the edge of the lateral discharge portion of the reciprocating conveyor;
deactivating the reciprocating conveyor (20) ;
vibrationally settling the frangible products (50) in the tote that is proximal to the first end of the reciprocating conveyor and in the tote that is distal to the first end of the reciprocating conveyor; and
transporting the frangible products (50) in the tote that is proximal to the first end of the reciprocating conveyor and in the tote that is distal to the first end of the reciprocating conveyor to a second location;
wherein filling the totes (60) includes causing the frangible products (50) to slide down the first steeply sloped portion (70), along the first transitionally sloped portion (71) and towards the lowermost portion (72) of the interior space (68) of the at least one tote (60).

13. The method of claim 12,
wherein the plurality of frangible products (50) discharged into the tote (60) that is proximal to the first end of the reciprocating conveyor (20) and in the tote that is distal to the first end of the reciprocating conveyor can be transported within the totes from the first location to a second location for one of processing, bagging and packaging.

## Patentansprüche

1. System zum Laden, Transportieren und Entladen einer Vielzahl von zerbrechlichen Produkten (50), das unerwünschten Bruch verhindert, das System umfassend:
eine Vielzahl von Behältern (60), jeder Behälter aufweisend eine Basis (60A), eine offene Oberseite (62, 64), einen abnehmbaren Deckel (63), der bemessen ist, um die offene Oberseite des Behälters einzugreifen, um die offene Oberseite zu schließen, eine erste Seite, eine zweite Seite gegenüber der ersten Seite, ein erstes Ende (66) zwischen der ersten Seite und der zweiten Seite, ein zweites Ende (67) gegenüber dem ersten Ende und zwischen der ersten Seite und der zweiten Seite, wobei das erste Ende eine Klappe (45) mit einer nach oben gekrümmten Form aufweist, und einen Klappenverschluss (46), der eine nach oben gekrümmte Form aufweist, die jener der Klappe entspricht und zwischen einer geschlossenen Position zum Schließen der Klappe und einer offenen Position zum Öffnen der Klappe beweglich ist, und einen Innenraum (68), der durch eine nach oben gekrümmte Oberfläche eines Innenraums definiert ist, wobei die nach oben gekrümmte Oberfläche einen ersten steil geneigten Abschnitt (70) proximal zu einem Schnittpunkt zwischen der ersten Seite und der offenen Oberseite des Behälters, einen untersten Abschnitt (72) proximal zu der Basis des Behälters und einen ersten übergehend geneigten Abschnitt (71) zwischen dem untersten Abschnitt der Oberfläche des Innenraums und dem ersten steil geneigten Abschnitt der Oberfläche des Innenraums aufweist;
eine Ladestation (100) an einer ersten Stelle, wobei die Ladestation Folgendes beinhaltet:
einen Schwingförderer (20), der einen Aufnahmeabschnitt (21) an einem ersten Ende, an dem die Vielzahl von Produkten (50) auf dem Schwingförderer aufgenommen werden, ein zweites Ende, eine glatte Oberfläche zum Tragen und Fördern einer großen Vielzahl der zerbrechlichen Produkte von dem ersten Ende zu dem zweiten Ende, und einen seitlichen Entladeabschnitt (22) proximal zu dem zweiten Ende, an dem die Vielzahl von zerbrechlichen Produkten seitlich von dem Schwingförderer entfernt wird, aufweist, wobei der Schwingförderer durch zyklisches Bewegen von einer ersten Position in einer ersten Richtung und mit einer ersten Beschleunigungsrate zu einer zweiten Position und dann durch Zurückkehren von der zweiten Position zu der ersten Position durch Bewegen in einer zweiten Richtung, entgegengesetzt zu der ersten Richtung, mit einer zweiten Beschleunigungsrate, die die Größe der ersten Beschleunigungsrate übersteigt, betrieben werden kann, um zu bewirken, dass die Produkte, die auf der glatten Oberfläche getragen werden, auf der glatten Oberfläche gleiten;
eine Behälterplattform (30), die einen oberen Abschnitt zum Eingreifen der Basis der Vielzahl von Behältern, ein erstes Ende (32) des oberen Abschnitts zum Tragen der Vielzahl von Behältern (60) angrenzend an den Entladeabschnitt (22) proximal zu dem zweiten Ende des Schwingförderers (20) aufweist, sodass zerbrechliche Produkte, die von dem Entladeabschnitt (22) des Schwingförderers entladen werden, nach unten fallen und auf den ersten steil geneigten Abschnitt (70) der Oberfläche des Innenraums des Behälters proximal zu dem Schnittpunkt zwischen der ersten Seite und der offenen Oberseite (62, 64) des Behälters, auftreffen, wobei die Behälterplattform ferner ein zweites Ende (34) aufweist, zu dem ein Behälter bewegt werden kann, nachdem er an dem ersten Ende der Behälterplattform mit zerbrechlichen Produkten gefüllt wurde; wobei mindestens einer der Vielzahl von Behältern (60) bei entferntem Deckel (63) und dem Klappenverschluss (46) in der geschlossenen Position zum Schließen der Klappe (45) an dem ersten Ende des mindestens einen Behälters mit seiner Basis, die auf dem ersten Ende (32) des oberen Abschnitts der Behälterplattform getragen wird, wobei die erste Seite des mindestens einen Behälters proximal zu und unterhalb von dem Entladeabschnitt (22) an dem zweiten Ende des Schwingförderers platziert wird;
wobei der Schwingförderer (20) eine Vielzahl der zerbrechlichen Produkte (50) zu dem seitlichen Entladeabschnitt (22) des Schwingförderers befördert;
wobei die zerbrechlichen Produkte (50) von dem seitlichen Entladeabschnitt (22) des Schwingförderers über den Schnittpunkt zwischen der ersten Seite und der offenen Oberseite (62, 64) des Behälters und in die offene Oberseite des mindestens einen Behälters entladen werden, um auf den ersten steil geneigten Abschnitt (70) aufzutreffen;
wobei die zerbrechlichen Produkte (50) den ersten steil geneigten Abschnitt (70) entlang des ersten übergehend geneigten Abschnitts (71) nach unten und in Richtung des untersten Abschnitts (72) des Innenraums (68) des mindestens einen Behälters (60) gleiten;
wobei zusätzliche zerbrechliche Produkte (50) von dem seitlichen Entladeabschnitt (22) proximal zu dem zweiten Ende des Schwingförderers in die offene Oberseite (62, 64) des mindestens einen Behälters (60) entladen werden, bis der Innenraum (68) des mindestens einen Behälters gefüllt ist; und
wobei die Vielzahl von zerbrechlichen Produkten (50), die in den mindestens einen Behälter (60) entladen werden, innerhalb des mindestens einen Behälters für eines von Verarbeiten, zum Abpacken und Verpacken von der ersten Stelle zu einer zweiten Stelle transportiert werden können.

2. System nach Anspruch 1, ferner umfassend:
wobei der Schwingförderer (20) einen Schalter beinhaltet, der betätigt werden kann, um den Schwingförderer von einem deaktivierten Modus in einen aktivierten Modus zu aktivieren und um den Schwingförderer von dem aktivierten Modus in den deaktivierten Modus außer Eingriff zu bringen;
wobei der Schwingförderer (20) unter Verwendung des Schalters außer Eingriff gebracht werden kann, um zu ermöglichen, dass einer oder mehrere der Vielzahl von Behältern (60), deren eine oder mehrere Innenräume (68) mit den zerbrechlichen Produkten (50) gefüllt sind, entfernt und durch einen leeren Behälter ersetzt werden.

3. System nach Anspruch 2, ferner umfassend:
ein Rüttelelement (87), das mit der Behälterplattform (30) gekoppelt ist, wobei das Rüttelelement einen aktivierten Modus, um den oberen Abschnitt der Behälterplattform in Schwingung zu versetzen, um die zerbrechlichen Produkte (50), die in den Innenraum des mindestens einen Behälters geladen sind, durch Schwingungen in eine dicht gepackte Konfiguration für den Transport zu bringen, und einen deaktivierten Modus aufweist.

4. System nach Anspruch 1, wobei der Entladeabschnitt (22) proximal zu dem zweiten Ende des Schwingförderers (20) bemessen ist, um zerbrechliche Produkte (50) entlang eines Abschnitts des Schwingförderers zu entladen, der länger ist als die erste Seite des mindestens einen Behälters (60); und
wobei das erste Ende der Behälterplattform (30) bemessen ist, um mindestens zwei Behälter (60) aufzunehmen, die in einer Konfiguration angeordnet sind, in der die ersten Seiten von jedem der mindestens zwei Behälter proximal zu dem Entladeabschnitt (22) des Schwingförderers (20) sind, sodass zerbrechliche Produkte, die von dem Entladeabschnitt des Schwingförderers entladen werden, auf den ersten steil geneigten Abschnitt (70) von jedem der mindestens zwei Behälter auftreffen.

5. System nach Anspruch 4, wobei ein erster Behälter (60) der mindestens zwei Behälter proximal zu dem ersten Ende des Schwingförderers (20) ist;
wobei ein zweiter Behälter (60) der mindestens zwei Behälter distal von dem ersten Ende des Schwingförderers ist; und
wobei die erste Seite des ersten Behälters der mindestens zwei Behälter mit der ersten Seite des zweiten Behälters der mindestens zwei Behälter an dem ersten Ende des oberen Abschnitts der Behälterplattform (30) ausgerichtet ist und proximal dazu ist.

6. System nach Anspruch 1, wobei die Behälterplattform (30) eine Vielzahl von länglichen zylindrischen Rollen (33) umfasst, die jeweils eine Achse aufweisen, wobei jede Rolle in einer fluchtenden Konfiguration mit der anderen der Vielzahl von Rollen drehbar an einem Rahmen der Behälterplattform befestigt ist, um zu ermöglichen, dass die Vielzahl von Behältern (60) mit minimalem Reibungswiderstand gegen die Bewegung der Behälter entlang der Vielzahl von Rollen von dem ersten Ende der Behälterplattform zu einem zweiten Ende der Behälterplattform befördert werden kann.

7. System nach Anspruch 1, ferner umfassend:
eine Entladestation (200) an einer zweiten Stelle, die von der ersten Stelle beabstandet ist, die Entladestation umfassend:
eine Vielzahl von Zulaufrinnen (38), wobei jede Zulaufrinne ein erstes Ende (69) zum Aufnehmen einer Vielzahl von zerbrechlichen Produkten und ein zweites Ende (37) zum Entladen der Vielzahl von zerbrechlichen Produkten aufweist, wobei das zweite Ende auf einer niedrigeren Höhe als das erste Ende ist, um jeder der Vielzahl von Zulaufrinnen ein Gefälle zu verleihen;
eine Vielzahl von Behälterträgern (39), wobei jeder Behälterträger proximal zu dem ersten Ende einer der Vielzahl von Zulaufrinnen (38) angeordnet ist, wobei jeder Behälterträger ein erstes Ende, ein zweites Ende und ein Anschlagelement (77) aufweist, um die Basis (60A) eines auf dem Behälterträger getragenen Behälters (60) einzugreifen und den Behälter auf dem Behälterträger zu halten, wobei das zweite Ende (37) von jedem der Behälterträger (39) auf einer niedrigeren Höhe ist als das erste Ende des Behälterträgers, um jedem der Behälterträger ein Gefälle zu verleihen, wobei das Gefälle in der gleichen Richtung wie das Gefälle der einen der Vielzahl von Zulaufrinnen (38) ist, zu der der Behälterträger proximal ist;
eine Vielzahl von Behälterträger-Rüttelelementen (47), wobei jedes Behälterträger-Rüttelelement mit einem der Vielzahl von Behälterträger (39) gekoppelt ist, wobei jedes Behälterträger-Rüttelelement aktivierbar ist, um den Behälterträger, mit dem es gekoppelt ist, in Schwingungen zu versetzen und dadurch einen der Vielzahl von Behälter (60), die darauf getragen werden, in Schwingung zu versetzen; und
einen Aufnahmeförderer (59), der proximal zu den zweiten Enden (37) der Vielzahl von Zulaufrinnen (38) angeordnet ist, um zerbrechliche Produkte, die von der Vielzahl von Zulaufrinnen abgegeben werden, aufzunehmen und zu einer Wiegemaschine, einer Verpackungsmaschine, einer Abfüllmaschine oder einer Verarbeitungseinrichtung an der zweiten Stelle zu befördern;
wobei die Vielzahl von Behältern (60), die mit zerbrechlichen Produkten beladen sind und von der ersten Stelle zu der zweiten Stelle transportiert werden, auf der Vielzahl von Behälterträgern (39) angeordnet sind;
wobei der Klappenverschluss (46) bewegt wird, um die Klappe (45) in jedem der Vielzahl von Behältern zu öffnen, die auf den Behälterträgern getragen werden;
wobei jedes der Vielzahl von Behälterträger-Rüttelelementen (47) aktivierbar ist, um den einen der Vielzahl von Behälterträgern (39), mit dem es gekoppelt ist, in Schwingung zu versetzen und um einen der Vielzahl von beladenen Behälterträger, die darauf getragen werden, in Schwingung zu versetzen, um zu bewirken, dass sich zerbrechliche Lebensmittelabschnitte (50) aus dem Innenraum des Behälterträgers heraus und auf das erste Ende der Zulaufrinne (38) bewegen, zu der der Behälterträger proximal ist; und
wobei jede der Vielzahl von Zulaufrinnen (38) die zerbrechlichen Produkte auf den Aufnahmeförderer (59) entlädt, der die zerbrechlichen Produkte entweder zu einer Wiegemaschine, einer Abfüllmaschine, einer Verpackungsmaschine oder einer Verarbeitungseinrichtung an der zweiten Stelle befördert.

8. System nach Anspruch 7, wobei der Aufnahmeförderer (59) ein Schwingförderer ist.

9. System nach Anspruch 7, wobei eine Querschnittsform von mindestens einer der Zulaufrinnen (38) mit einer Querschnittsform des Innenraums mindestens eines der Behälter (60) übereinstimmt.

10. System nach Anspruch 7, wobei ein unterster Abschnitt (76) von jeder der Vielzahl von Zulaufrinnen (38) mit dem untersten Abschnitt (72) des Innenraums von einem der Vielzahl von Behältern (60) ausgerichtet ist, der auf einem der Vielzahl von Behälterträgern (39) proximal zu dem ersten Ende der mindestens einen der Zulaufrinnen getragen wird.

11. System nach Anspruch 1, wobei der mindestens eine Behälter (60) zwei oder mehrere Behälter sind, die an dem ersten Ende der Behälterplattform (30) ausgerichtet sind, wobei die erste Seite von jedem der zwei oder mehreren Behälter mit der ersten Seite der anderen der zwei oder mehreren Behälter ausgerichtet ist, und die ersten Seiten der zwei oder mehreren Behälter proximal zu und unterhalb von einem Rand des seitlichen Entladeabschnitts (22) des Schwingförderers (20) sind;
wobei der seitliche Entladeabschnitt (22) des Schwingförderers (20) wesentlich länger ist als die erste Seite der zwei oder mehreren Behälter (60), um ein Füllen der zwei oder mehreren Behälter durch Entladen zerbrechlicher Produkte (50) von dem Rand des seitlichen Entladeabschnitts des Schwingförderers zu ermöglichen; und
wobei einer der zwei oder mehreren Behälter (60), der proximal zu dem ersten Ende des Schwingförderers (20) ist, gefüllt wird, bis sich durch das Füllen des einen der zwei oder mehreren Behälter, proximal zu dem ersten Ende des Schwingförderers ist, ein Gegendruck ergibt, der bewirkt, dass sich ankommende zerbrechliche Produkte (50), die sich auf dem Schwingförderer (20) bewegen, weiter in Richtung des zweiten Endes des Schwingförderers bewegen und dann von dem seitlichen Entladeabschnitt (22) des Schwingförderers (20) in einen zweiten der zwei oder mehreren Behälter, der neben dem ersten der zwei oder mehr Behälter angeordnet ist, entladen werden.

12. Verfahren zum Füllen von zwei oder mehreren Behältern (60) mit zerbrechlichen Produkten (50) für einen Transport der zerbrechlichen Produkte, umfassend:
Bereitstellen einer Vielzahl von Behältern (60), jeder Behälter aufweisend eine Basis (60A), eine offene Oberseite (62, 64), einen abnehmbaren Deckel (63), der bemessen ist, um die offene Oberseite des Behälters einzugreifen, um die offene Oberseite zu schließen, eine erste Seite, eine zweite Seite gegenüber der ersten Seite, ein erstes Ende (66) zwischen der ersten Seite und der zweiten Seite, ein zweites Ende (67) gegenüber dem ersten Ende und zwischen der ersten Seite und der zweiten Seite, wobei das erste Ende eine Klappe (45) mit einer nach oben konkaven Form aufweist, und einen Klappenverschluss (46), der zwischen einer geschlossenen Position zum Schließen der Klappe und einer offenen Position zum Öffnen der Klappe beweglich ist, und einen Innenraum (68), der durch eine nach oben konkave Oberfläche definiert ist, wobei die nach oben konkave Oberfläche einen ersten steil geneigten Abschnitt (70) proximal zu einem Schnittpunkt zwischen der ersten Seite und der offenen Oberseite des Behälters, einen untersten Abschnitt (72) proximal zu der Basis des Behälters und einen ersten übergehend geneigten Abschnitt (71) zwischen dem untersten Abschnitt des Innenraums und dem ersten steil geneigten Abschnitt aufweist;
Bereitstellen, an einer ersten Stelle, eines Schwingförderers (20), der einen Aufnahmeabschnitt (21) an einem ersten Ende, an dem die Vielzahl von Produkten (50) auf dem Schwingförderer aufgenommen werden, ein zweites Ende, eine glatte Oberfläche zum Tragen und Fördern einer großen Vielzahl der zerbrechlichen Produkte von dem ersten Ende zu dem zweiten Ende, und einen seitlichen Entladeabschnitt (22) proximal zu dem zweiten Ende, an dem die Vielzahl von zerbrechlichen Produkten seitlich von dem Schwingförderer entfernt wird, aufweist, wobei der Schwingförderer durch zyklisches Bewegen von einer ersten Position in einer ersten Richtung und mit einer ersten Beschleunigungsrate, um die Produkte, die auf der glatten Oberfläche getragen werden, um eine Strecke zu einer zweiten Position und dann Zurückkehren von der zweiten Position zu der ersten Position durch Bewegen in einer zweiten Richtung, entgegengesetzt zu der ersten Richtung, mit einer zweiten Beschleunigungsrate, die die Größe der ersten Beschleunigungsrate übersteigt, betrieben werden kann, um zu bewirken, dass die Produkte, die auf der glatten Oberfläche getragen werden, auf der glatten Oberfläche gleiten;
Bereitstellen einer Behälterplattform (30) an der ersten Stelle, die einen oberen Abschnitt zum Eingreifen der Basis der Vielzahl von Behältern aufweist, wobei ein erstes Ende (32) des oberen Abschnitts zum Tragen der Vielzahl von Behältern (60) angrenzend an den Entladeabschnitt (22) an dem zweiten Ende des Schwingförderers (20) dient, sodass zerbrechliche Produkte, die aus dem Entladeabschnitt (22) des Schwingförderers entladen werden, nach unten fallen und auf den ersten steil geneigten Abschnitt (70) proximal zu dem Schnittpunkt zwischen der ersten Seite und der offenen Oberseite (62, 64) des Behälters auftreffen, wobei die Behälterplattform ferner ein zweites Ende (34) aufweist, zu dem ein Behälter bewegt werden kann, nachdem er an dem ersten Ende der Behälterplattform mit zerbrechlichem Produkt gefüllt wurde;
Positionieren von mindestens zwei der Vielzahl von Behältern (60), wobei der Deckel (63) entfernt und der Klappenverschluss (46) in der geschlossenen Position ist, um die Klappe (45) an dem ersten Ende des mindestens einen Behälters zu schließen, mit den Basen der Behälter, die auf dem ersten Ende (32) des oberen Abschnitts der Behälterplattform getragen werden, wobei die erste Seite der mindestens zwei Behälter proximal zu und unterhalb von dem seitlichen Entladeabschnitt (22) an dem zweiten Ende des Schwingförderers angeordnet ist;
Aktivieren des Schwingförderers (20), um eine Vielzahl der zerbrechlichen Produkte (50) zu dem seitlichen Entladeabschnitt (22) des Schwingförderers zu befördern;
Entladen von zumindest einigen der Vielzahl der zerbrechlichen Produkte (50) von dem seitlichen Entladeabschnitt (22) des Schwingförderers über den Schnittpunkt zwischen der ersten Seite und der offenen Oberseite (62, 64) des Behälters und in die offene Oberseite des Behälters auf der Behälterplattform und proximal zu dem ersten Ende des Schwingförderers, um auf den ersten steil geneigten Abschnitt (70) aufzutreffen;
Füllen des Behälters (60) auf der Behälterplattform (30), der proximal zu dem ersten Ende des Schwingförderers ist, bis ein Gegendruck durch eine Ansammlung von zerbrechlichen Produkten entlang des Rands des seitlichen Entladeabschnitts (22) angrenzend an den Behälter auf der Behälterplattform, der proximal zu dem ersten Ende des Schwingförderers (20) ist, erzeugt wird;
Befördern der ankommenden zerbrechlichen Produkte weiter nach unten auf dem Schwingförderer (20) in Richtung des zweiten Endes des Schwingförderers und in Richtung des Rands des seitlichen Entladeabschnitts (22) des Schwingförderers, der an einen Behälter angrenzt, der distal zu dem ersten Ende des Schwingförderers ist, und der an den Behälter (60) angrenzt, der proximal zu dem ersten Ende des Schwingförderers ist;
Füllen des Behälters (60) auf der Behälterplattform (30), der distal von dem ersten Ende des Schwingförderers und angrenzend an den Behälter ist, der proximal zu dem ersten Ende des Schwingförderers ist, mit zerbrechlichen Produkten, die von dem Rand des seitlichen Entladeabschnitts des Schwingförderers entladen werden;
Deaktivieren des Schwingförderers (20);
rüttelndes Setzen der zerbrechlichen Produkte (50) in dem Behälter, der proximal zu dem ersten Ende des Schwingförderers ist, und in dem Behälter, der distal von dem ersten Ende des Schwingförderers ist; und
Transportieren der zerbrechlichen Produkte (50) in dem Behälter, der proximal zu dem ersten Ende des Schwingförderers ist, und in dem Behälter, der distal von dem ersten Ende des Schwingförderers ist, zu einer zweiten Stelle;
wobei ein Füllen der Behälter (60) beinhaltet, dass die zerbrechlichen Produkte (50) veranlasst werden, den ersten steil geneigten Abschnitt (70) entlang des ersten übergehend geneigten Abschnitts (71) nach unten und in Richtung des untersten Abschnitts (72) des Innenraums (68) des mindestens einen Behälters (60) zu gleiten.

13. Verfahren nach Anspruch 12,
wobei die Vielzahl von zerbrechlichen Produkten (50), die in den Behälter (60), der proximal zu dem ersten Ende des Schwingförderers (20) ist, und in den Behälter, der distal von dem ersten Ende des Schwingförderers ist, entladen werden, in den Behältern von der ersten Stelle zu einer zweiten Stelle zu einem von Verarbeiten, Abfüllen und Verpacken transportiert werden können.

## Revendications

1. Système destiné au chargement, au transport et au déchargement d'une pluralité de produits cassants (50) qui empêche des bris indésirables, le système comprenant :
une pluralité de bacs (60), chaque bac possédant une base (60A), une partie supérieure ouverte (62, 64), un couvercle amovible (63) dimensionné pour se mettre en prise avec la partie supérieure ouverte du bac pour fermer la partie supérieure ouverte, un premier côté, un second côté, opposé au premier côté, une première extrémité (66) entre le premier côté et le second côté, une seconde extrémité (67) opposée à la première extrémité et entre le premier côté et le second côté, la première extrémité possédant un porte (45) avec une forme incurvée vers le haut, et une fermeture de porte (46) possédant une forme incurvée vers le haut correspondant à celle de la porte et mobile entre une position fermée pour fermer la porte et une position ouverte pour ouvrir la porte, et un espace intérieur (68) défini par une surface incurvée vers le haut d'un espace intérieur, la surface incurvée vers le haut possédant une première partie fortement inclinée (70) à proximité d'une intersection entre le premier côté et la partie supérieure ouverte du bac, une partie la plus basse (72) à proximité de la base du bac, et une première partie en pente de transition (71) entre la partie la plus basse de la surface de l'espace intérieur et la première partie fortement inclinée de la surface de l'espace intérieur ;
une station de chargement (100) au niveau d'un premier emplacement, la station de chargement comprenant :
un transporteur par secousses (20) possédant une partie de réception (21) au niveau d'une première extrémité au niveau de laquelle la pluralité de produits (50) sont reçus sur le transporteur par secousses, une seconde extrémité, une surface lisse destinée à supporter et à transporter une grande pluralité de produits cassants à partir de la première extrémité vers la seconde extrémité, et une partie de décharge latérale (22) à proximité de la seconde extrémité au niveau de laquelle la pluralité de produits cassants sont retirés latéralement du transporteur par secousses, le transporteur par secousses pouvant fonctionner par déplacement cyclique à partir d'une première position dans une première direction et à un premier taux d'accélération jusqu'à une seconde position, et ensuite en revenant de la seconde position jusqu'à la première position en se déplaçant dans une seconde direction, opposée à la première direction, à un second taux d'accélération qui dépasse l'amplitude du premier taux d'accélération pour amener les produits supportés sur la surface lisse à glisser sur la surface lisse ;
une plate-forme de bac (30) possédant une partie haute destinée à se mettre en prise avec la base de la pluralité de bacs, une première extrémité (32) de la partie haute destinée à supporter la pluralité de bacs (60) adjacente à la partie de décharge (22) à proximité de la seconde extrémité du transporteur par secousses (20) de sorte que les produits cassants déchargés de la partie de décharge (22) du transporteur par secousses tombent vers le bas et heurtent la première partie fortement inclinée (70) de la surface de l'espace intérieur du bac à proximité de l'intersection entre le premier côté et la partie supérieure ouverte (62, 64) du bac, la plate-forme de bac possédant en outre une seconde extrémité (34) vers laquelle un bac peut être déplacé après avoir été rempli de produits cassants au niveau de la première extrémité de la plate-forme de bac ; au moins un de la pluralité de bacs (60), avec le couvercle (63) retiré et la fermeture de porte (46) dans la position fermée pour fermer la porte (45) au niveau de la première extrémité de l'au moins un bac, étant placé avec sa base supportée sur la première extrémité (32) de la partie haute de la plate-forme de bac avec le premier côté de l'au moins un bac disposé à proximité et au-dessous de la partie de décharge (22) au niveau de la seconde extrémité du transporteur par secousses ;
ledit transporteur par secousses (20) transportant une pluralité de produits cassants (50) jusqu'à la partie de décharge latérale (22) du transporteur par secousses ;
lesdits produits cassants (50) étant déchargés de la partie de décharge latérale (22) du transporteur par secousses sur l'intersection entre le premier côté et la partie supérieure ouverte (62, 64) du bac et dans la partie supérieure ouverte de l'au moins un bac pour heurter la première partie fortement inclinée (70) ;
lesdits produits cassants (50) glissant vers le bas de la première partie fortement inclinée (70), le long de la première partie en pente de transition (71) et vers la partie la plus basse (72) de l'espace intérieur (68) de l'au moins un bac (60) ;
des produits cassants supplémentaires (50) étant déchargés de la partie de décharge latérale (22) à proximité de la seconde extrémité du transporteur par secousses dans la partie supérieure ouverte (62, 64) de l'au moins un bac (60) jusqu'à ce que l'espace intérieur (68) de l'au moins un bac soit rempli ; et
ladite pluralité de produits cassants (50) déchargés dans l'au moins un bac (60) pouvant être transportés à l'intérieur de l'au moins un bac à partir du premier emplacement jusqu'à un second emplacement pour un traitement, un ensachage et un emballage.

2. Système selon la revendication 1, comprenant en outre :
ledit transporteur par secousses (20) comprenant un commutateur servant à activer le transporteur par secousses d'un mode désactivé à un mode activé et à désengager le transporteur par secousses du mode activé au mode désactivé ;
ledit transporteur par secousses (20) pouvant être désengagé à l'aide du commutateur pour permettre à un ou plusieurs de la pluralité de bacs (60) possédant un ou plusieurs espaces intérieurs (68) remplis des produits cassants (50) d'être retirés et remplacés par un bac vide.

3. Système selon la revendication 2, comprenant en outre :
un élément de vibration (87) couplé à la plate-forme de bac (30), l'élément de vibration possédant un mode activé, destiné à transmettre des vibrations à la partie haute de la plate-forme de bac afin de déposer par vibration les produits cassants (50) chargés dans l'espace intérieur de l'au moins un bac dans une configuration densément emballée pour être transporté, et un mode désactivé.

4. Système selon la revendication 1, ladite partie de décharge (22) à proximité de la seconde extrémité du transporteur par secousses (20) étant dimensionnée pour décharger des produits cassants (50) le long d'une section du transporteur par secousses qui est plus longue que le premier côté de l'au moins un bac (60) ; et
ladite première extrémité de la plate-forme de bac (30) étant dimensionnée pour recevoir au moins deux bacs (60) agencés dans une configuration dans laquelle les premiers côtés de chacun des au moins deux bacs sont à proximité de la partie de décharge (22) du transporteur par secousses (20) afin que les produits cassants déchargés de la partie de décharge du transporteur par secousses heurtent la première partie fortement inclinée (70) de chacun des au moins deux bacs.

5. Système selon la revendication 4, un premier bac (60) des au moins deux bacs étant à proximité de la première extrémité du transporteur par secousses (20) ;
un second bac (60) des au moins deux bacs étant distal par rapport à la première extrémité du transporteur par secousses ; et
ledit premier côté du premier bac des au moins deux bacs étant aligné avec le premier côté du second bac des au moins deux bacs et à proximité de celui-ci sur la première extrémité de la partie haute de la plate-forme de bac (30).

6. Système selon la revendication 1, ladite plate-forme de bac (30) comprenant une pluralité de rouleaux cylindriques allongés (33), chacun possédant un axe, chaque rouleau étant fixé de manière rotative à un cadre de la plate-forme de bac dans une configuration alignée avec l'autre de la pluralité de rouleaux pour permettre à la pluralité de bacs (60) d'être transportés le long de la pluralité de rouleaux à partir de la première extrémité de la plate-forme de bac jusqu'à une seconde extrémité de la plate-forme de bac avec une résistance de frottement au mouvement des bacs minimale.

7. Système selon la revendication 1, comprenant en outre :
une station de déchargement (200) au niveau d'un second emplacement espacé du premier emplacement, la station de déchargement comprenant :
une pluralité de goulottes affluentes (38), chaque goulotte affluente possédant une première extrémité (69) destinée à recevoir une pluralité de produits cassants, une seconde extrémité (37) destinée à décharger la pluralité de produits cassants, ladite seconde extrémité étant à une hauteur plus basse que la première extrémité pour conférer une descente à chacune de la pluralité de goulottes affluentes ;
une pluralité de supports de bac (39), chaque support de bac étant disposé à proximité de la première extrémité de l'une de la pluralité de goulottes affluentes (38), chaque support de bac possédant une première extrémité, une seconde extrémité et un élément d'arrêt (77) pour se mettre en prise avec la base (60A) d'un bac (60) supporté sur le support de bac et pour retenir le bac sur le support de bac, la seconde extrémité (37) de chacun des supports de bac (39) étant à une hauteur plus basse que la première extrémité du support de bac pour conférer une descente à chacun des supports de bac, la descente étant dans la même direction que la descente de l'une de la pluralité de goulottes affluentes (38) de laquelle le support de bac est à proximité ;
une pluralité d'éléments de vibration (47) de support de bac, chaque élément de vibration de support de bac étant couplé à l'un de la pluralité de supports de bac (39), chaque élément de vibration de support de bac pouvant être activé pour transmettre des vibrations au support de bac auquel il est couplé et pour transmettre ainsi des vibrations à l'un de la pluralité de bacs (60) supportés sur celui-ci ; et
un transporteur de réception (59) disposé à proximité des secondes extrémités (37) de la pluralité de goulottes affluentes (38) destiné à recevoir et à transporter des produits cassants déchargés de la pluralité de goulottes affluentes vers l'une d'une balance, d'une machine d'emballage, d'une machine d'ensachage et d'une installation de traitement au niveau du second emplacement ;
ladite pluralité de bacs (60) chargés de produits cassants et transportés du premier emplacement au second emplacement étant disposés sur la pluralité de supports de bac (39) ;
ladite fermeture de porte (46) étant déplacée pour ouvrir la porte (45) dans chacun de la pluralité de bacs supportés sur les supports de bac ;
chacun de la pluralité d'éléments de vibration (47) de support de bac pouvant être activé pour transmettre des vibrations à l'un de la pluralité de supports de bac (39) auquel il est couplé et pour transmettre des vibrations à l'un de la pluralité de supports de bac chargés supportés sur celui-ci pour amener les parties d'aliments cassants (50) à sortir de l'espace intérieur du support de bac et sur la première extrémité de la goulotte affluente (38) de laquelle le support de bac est à proximité ; et
chacune de la pluralité de goulottes affluentes (38) déchargeant les produits cassants sur le transporteur de réception (59) qui transporte les produits cassants vers l'une d'une balance, d'une machine d'ensachage, d'une machine d'emballage et d'une installation de traitement au niveau du second emplacement.

8. Système selon la revendication 7, ledit transporteur de réception (59) étant un transporteur par secousses.

9. Système selon la revendication 7, une forme en coupe transversale d'au moins l'une des goulottes affluentes (38) épousant une forme en coupe transversale de l'espace intérieur d'au moins l'un des bacs (60).

10. Système selon la revendication 7, une partie la plus basse (76) de chacune de la pluralité de goulottes affluentes (38) étant alignée avec la partie la plus basse (72) de l'espace intérieur de l'un de la pluralité de bacs (60) supporté sur l'un de la pluralité de supports de bac (39) à proximité de la première extrémité de l'au moins une des goulottes affluentes.

11. Système selon la revendication 1, ledit au moins un bac (60) étant deux bacs, ou plus, alignés sur la première extrémité de la plate-forme de bac (30) avec le premier côté de chacun des deux bacs, ou plus, qui est aligné avec le premier côté des autres des deux bacs, ou plus, et lesdits premiers côtés des deux bacs, ou plus, étant à proximité et au-dessous d'un bord de la partie de décharge latérale (22) du transporteur par secousses (20) ;
ladite partie de décharge latérale (22) du transporteur par secousses (20) étant sensiblement plus longue que le premier côté des deux bacs (60), ou plus, pour permettre le remplissage des deux bacs, ou plus, en déchargeant des produits cassants (50) à partir du bord de la partie de décharge latérale du transporteur par secousses ; et
l'un des deux bacs (60), ou plus, qui est à proximité de la première extrémité du transporteur par secousses (20) se remplissant jusqu'à ce qu'une contre-pression résulte du remplissage de l'un des deux bacs, ou plus, qui est à proximité de la première extrémité du transporteur par secousses, amenant les produits cassants entrants (50) se déplaçant sur le transporteur par secousses (20) à se déplacer davantage vers la seconde extrémité du transporteur par secousses et à être ensuite déchargés de la partie de décharge latérale (22) du transporteur par secousses (20) dans un second des deux bacs, ou plus, qui est disposé adjacent au premier des deux bacs, ou plus.

12. Procédé de remplissage de deux bacs (60), ou plus, avec des produits cassants (50) en vue du transport de produits cassants, comprenant :
la fourniture d'une pluralité de bacs (60), chaque bac possédant une base (60A), une partie supérieure ouverte (62, 64), un couvercle amovible (63) dimensionné pour se mettre en prise avec la partie supérieure ouverte du bac pour fermer la partie supérieure ouverte, un premier côté, un second côté, opposé au premier côté, une première extrémité (66) entre le premier côté et le second côté, une seconde extrémité (67) opposée à la première extrémité et entre le premier côté et le second côté, la première extrémité possédant une porte (45) avec une forme concave vers le haut, et une fermeture de porte (46) mobile entre une position fermée pour fermer la porte et une position ouverte pour ouvrir la porte, et un espace intérieur (68) défini par une surface concave vers le haut, la surface concave vers le haut possédant une première partie fortement inclinée (70) à proximité d'une intersection entre le premier côté et la partie supérieure ouverte du bac, une partie la plus basse (72) à proximité de la base du bac, et une première partie en pente de transition (71) entre la partie la plus basse de l'espace intérieur et la première partie fortement inclinée ;
la fourniture, au niveau d'un premier emplacement, d'un transporteur par secousses (20) possédant une partie de réception (21) au niveau d'une première extrémité au niveau de laquelle la pluralité de produits (50) sont reçus sur le transporteur par secousses, une seconde extrémité, une surface lisse destinée à supporter et à transporter une grande pluralité de produits cassants à partir de la première extrémité vers la seconde extrémité, et une partie de décharge latérale (22) à proximité de la seconde extrémité au niveau de laquelle la pluralité de produits cassants sont retirés latéralement du transporteur par secousses, le transporteur par secousses pouvant être actionné par déplacement cyclique d'une première position dans une première direction et à un premier taux d'accélération pour déplacer les produits supportés sur la surface lisse sur une distance jusqu'à une seconde position, et ensuite revenir de la seconde position à la première position en se déplaçant dans une seconde direction, à l'opposé de la première direction, à un second taux d'accélération qui dépasse l'amplitude du premier taux d'accélération pour amener les produits supportés sur la surface lisse à glisser sur la surface lisse ;
la fourniture, au niveau du premier emplacement, d'une plate-forme de bac (30) possédant une partie haute destinée à se mettre en prise avec la base de la pluralité de bacs, une première extrémité (32) de la partie haute destinée à supporter la pluralité de bacs (60) adjacente à la partie de décharge (22) au niveau de la seconde extrémité du transporteur par secousses (20) de sorte que les produits cassants déchargés de la partie de décharge (22) du transporteur par secousses tombent vers le bas et heurtent la première partie fortement inclinée (70) à proximité alors de l'intersection entre le premier côté et la partie supérieure ouverte (62, 64) du bac, la plate-forme de bac possédant en outre une seconde extrémité (34) vers laquelle un bac peut être déplacé après avoir été rempli de produit cassant au niveau de la première extrémité de la plate-forme de bac ;
le positionnement d'au moins deux de la pluralité de bacs (60), avec le couvercle (63) retiré et la fermeture de porte (46) dans la position fermée pour fermer la porte (45) au niveau de la première extrémité de l'au moins un bac, avec les bases des bacs supportées sur la première extrémité (32) de la partie haute de la plate-forme de bac avec le premier côté des au moins deux bacs disposés à proximité et au-dessous de la partie de décharge latérale (22) au niveau de la seconde extrémité du transporteur par secousses ;
l'activation du transporteur par secousses (20) pour transporter une pluralité de produits cassants (50) vers la partie de décharge latérale (22) du transporteur par secousses ;
la décharge d'au moins une partie de la pluralité de produits cassants (50) de la partie de décharge latérale (22) du transporteur par secousses sur l'intersection entre le premier côté et la partie supérieure ouverte (62, 64) du bac et dans la partie supérieure ouverte du bac sur la plate-forme de bac et à proximité de la première extrémité du transporteur par secousses pour heurter la première partie fortement inclinée (70) ;
le remplissage du bac (60) sur la plate-forme de bac (30) qui est à proximité de la première extrémité du transporteur par secousses jusqu'à ce qu'une contre-pression soit créée par une accumulation de produits cassants le long du bord de la partie de décharge latérale (22) adjacente au bac sur la plate-forme de bac qui est à proximité de la première extrémité du transporteur par secousses (20) ;
le transport des produits cassants entrants plus en aval du transporteur par secousses (20) vers la seconde extrémité du transporteur par secousses et vers le bord de la partie de décharge latérale (22) du transporteur par secousses qui est adjacente à un bac qui est distal par rapport à la première extrémité du transporteur par secousses et adjacente au bac (60) qui est à proximité de la première extrémité du transporteur par secousses ;
le remplissage du bac (60) sur la plate-forme de bac (30) qui est distale par rapport à la première extrémité du transporteur par secousses et adjacente au bac qui est à proximité de la première extrémité du transporteur par secousses avec des produits cassants déchargés du bord de la partie de décharge latérale du transporteur par secousses ;
la désactivation du transporteur par secousses (20) ;
le dépôt par vibration des produits cassants (50) dans le bac qui est à proximité de la première extrémité du transporteur par secousses et dans le bac qui est distal par rapport à la première extrémité du transporteur par secousses ; et
le transport des produits cassants (50) dans le bac qui est à proximité de la première extrémité du transporteur par secousses et dans le bac qui est distal par rapport à la première extrémité du transporteur par secousses jusqu'à un second emplacement ;
ledit remplissage des bacs (60) comprenant l'entraînement des produits cassants (50) à glisser vers le bas de la première partie fortement inclinée (70), le long de la première partie en pente de transition (71) et vers la partie la plus basse (72) de l'espace intérieur (68) de l'au moins un bac (60).

13. Procédé selon la revendication 12,
ladite pluralité de produits cassants (50) déchargés dans le bac (60) qui est à proximité de la première extrémité du transporteur par secousses (20) et dans le bac qui est distal par rapport à la première extrémité du transporteur par secousses pouvant être transportés à l'intérieur des bacs à partir du premier emplacement jusqu'à un second emplacement en vue de l'un du traitement, de l'ensachage et l'emballage.
